(19) Europäisches Patentamt
European Patent Office
Office européen des brevets

(11) EP 2 880 406 B1

# (12) EUROPÄISCHE PATENTSCHRIFT

(45) Veröffentlichungstag und Bekanntmachung des Hinweises auf die Patenterteilung:
**17.06.2020  Patentblatt 2020/25**

(51) Int Cl.:
***G01F 1/60*** (2006.01)

(21) Anmeldenummer: **13732173.3**

(22) Anmeldetag: **28.06.2013**

(86) Internationale Anmeldenummer:
**PCT/EP2013/063624**

(87) Internationale Veröffentlichungsnummer:
**WO 2014/019779 (06.02.2014 Gazette 2014/06)**

(54) **MESSELEKTRONIK FÜR EIN MAGNETISCH-INDUKTIVES DURCHFLUSS-MESSGERÄT SOWIE DAMIT GEBILDETES MESSSYSTEM**

MEASURING CIRCUIT FOR A MAGNETIC-INDUCTIVE TYPE FLOWMETER AND MEASURING SYSTEM INCLUDING SUCH A MEASURING CIRCUIT

CIRCUIT DE MESURE POUR UN DÉBIMÈTRE DU TYPE MAGNÉTO-INDUCTIF ET SYSTÈME DE MESURE COMPRENANT UN TEL CIRCUIT DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.07.2012  DE 102012106926**

(43) Veröffentlichungstag der Anmeldung:
**10.06.2015  Patentblatt 2015/24**

(73) Patentinhaber: **Endress+Hauser Flowtec AG**
**4153 Reinach (CH)**

(72) Erfinder:
• **KÜNG, Thomas**
**CH-4052 Basel (CH)**
• **SPAHLINGER, Andre**
**79415 Bad Bellingen (DE)**
• **RÜFENACHT, Markus**
**4106 Therwil (CH)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**US-A- 4 704 908    US-A- 4 723 449**
**US-A- 5 907 103    US-B2- 6 708 569**

EP 2 880 406 B1

**Beschreibung**

Die Erfindung betrifft eine, insb. für die Verwendung in einem magnetisch-induktiven Durchflußmeßgerät geeignete, Meßelektronik zum Ermitteln einer, insb. von einer einer Volumendurchflußrate einer einem vorübergehend konstanten Magnetfeld ausgesetzten strömenden Flüssigkeit abhängigen, Potentialdifferenz zwischen zwei voneinander abweichende elektrische Potentiale aufweisenden Meßelektroden, wobei die Potentialdifferenz eine zeitlich veränderliche Nutzkomponente sowie eine dieser überlagerte Störkomponenten aufweist. Ferner betrifft die Erfindung ein mittels einer solchen Meßelektronik gebildetes Meßsystem, insb. magnetisch-induktives Durchflußmeßgerät.

Meßelektroniken der in Rede stehenden Art sind beispielsweise in der der DE-C 197 16 119, der DE-C 197 16 151, der EP-A 027 181, der US-A 2002/145417, der US-A 2005/0125168, der US-A 2010/0231294, der US-A 43 82 387, der US-A 47 04 908, der US-B 66 93 486, der US-B 67 08 569 oder der US-B 81 74 312 beschrieben und umfassen zumeist eine mittels Impedanzwandlern gebildete Eingangsschaltung zum weitgehend stromlosen, mithin möglichst rückwirkungsfreien Abgreifen der an den beiden Meßelektroden gebildeten Potentiale, von der ein erster Schaltungseingang mit einer ersten der Meßelektroden und eine zweiter Schaltungseingang mit einer zweiter der Meßelektrode elektrisch verbunden sind.

Die - zwecks einer hohen Gleichtaktunterdrückung beispielsweise als ein die Potentialdifferenz proportional, ggf. auch - wie z.B. in der US-B 66 93 486 oder US-B 81 74 312 beschrieben - volldifferentiell, verstärkender Differenzverstärker ausgebildete - Eingangsschaltung liefert entweder an einem Signalausgang eine auf ein Bezugspotential der Vorrichtung, beispielsweise Masse, bezogene analoge Meßspannung als ein direktes Maß für die Potentialdifferenz oder an einem ersten Signalspannungsausgang eine auf ein Bezugspotential bezogene, vom elektrischen Potential an der ersten Meßelektrode abhängige erste Signalspannung und an einem zweiten Signalspannungsausgang eine auf nämliches Bezugspotential bezogene, vom elektrischen Potential an der zweiten Meßelektrode abhängige zweite Signalspannung. Die Eingangsschaltung ist ausgangsseitig jeweils mit einer zumeist als Mikrocomputer ausgebildete Meß- und Steuerschaltung der Vorrichtung verbunden, welche Meß- und Steuerschaltung u.a. dazu dient, entweder die die Potentialdifferenz analog repräsentierende Meßspannung oder die beiden separaten Signalspannungen in ein die zwischen beiden Meßelektroden herrschende Potentialdifferenz repräsentierendes digitales Spannungsmeßsignal umzusetzen.

Derartige Meßelektroniken werden nicht zuletzt in magnetisch-induktiven Meßwandlern, mithin in damit gebildeten magnetisch-induktiven Durchflußmeßgeräten, sogenannten MID, nämlich zur Messung einer Potentialdifferenz verwendet, die von einer Volumendurchflußrate einer einem mit vorgegebenem, typischerweise zwischen 25Hz und 100Hz liegenden, Takt umgepolten, mithin zeitlich veränderlichen Magnetfeld ausgesetzten strömenden Flüssigkeit abhängig ist. Solche als MID ausgebildete Meßsysteme für strömenden Flüssigkeit sind seit langem bekannt und nicht zuletzt auch in der Patentliteratur umfänglich beschrieben, beispielsweise in eingangs erwähnten DE-C 197 16 119, DE-C 197 16 151, EP-A 027 181, US-A 2002/0145417, US-A 2005/0125168, US-A 2010/0231294, US-A 43 82 387, US-A 47 04 908, US-B 67 08 569 bzw. US-B 66 93 486.

Üblicherweise werden solche, zumal industrietauglichen MID jeweils als vorkonfektioniertes Meßsystem angeboten, bei dem sowohl die Meßelektroden voneinander beabstandet als auch ein Magnetfeldgenerator an einem dem Führen einer strömenden Flüssigkeit dienenden, innen mit einer Isolierschicht, dem sogenannten Liner, ausgekleideten Meßrohr angeordnet sind. Die Meßelektroden sind hier so eingerichtet, das deren jeweiliges elektrisches Potential jeweils von einer in einer im Meßrohr geführten Flüssigkeit auftretenden - beispielsweise durch Ladungsträgerverschiebung innerhalb der Flüssigkeit bewirkten - elektrischen Spannung abhängig ist. Typischerweise sind die Meßelektroden hierbei entlang einer gedachten, im wesentlichen kreisförmigen bzw. eine Querschnittsfläche des Meßrohrs umspannende, Umfangslinie des Meßrohrs voneinander beabstandet am Meßrohr angeordnet, zumeist auch auf ein und demselben Durchmesser nämlichen Meßrohrs liegend.

Der Magnetfeldgenerator ist dafür vorgesehen, im Betrieb des MID das erwähnte Magnetfeld zu erzeugen, und zwar derart, daß das Magnetfeld das Lumen des Meßrohrs zumindest teilweise - nämlich mit einer senkrecht zu einer die beiden Meßelektroden imaginär verbindenden gedachten Verbindungsachse verlaufende, die Nutzkomponente der Potentialdifferenz beeinflussende Nutzkomponente - auch innerhalb eines sich zwischen den Meßelektroden erstreckenden Bereichs, durchsetzt. Die Meßelektroden können beispielsweise als galvanische, nämlich jeweils mit einer Elektrodenspitze in ein Lumen des Meßrohrs ragende bzw. von einer darin geführten Flüssigkeit kontaktierbare Meßelektroden, oder beispielsweise auch als in den Liner eingebettet kapazitive Meßelektroden ausgebildet sein.

Nachdem die in der industriellen Meßtechnik verwendeten MID wie bereits erwähnt, nicht zuletzt auch zwecks des Ermöglichens einer Kompensation von elektrochemischen Störpotentialen an den Meßelektroden, üblicherweise mit Magnetfeldern von periodisch wechselnder Magnetfeldrichtung betrieben sind, derart, daß die Magnetfeldrichtung der Nutzkomponente des Magnetfelds mit einer vorgebbaren Taktrate periodisch ändert, sind die entsprechenden Magnetfeldgeneratoren zumeist mittels eines von der Meß- und Auswerteschaltung generierten, einen entsprechenden Takt vorgebenden - beispielsweise auch selbst periodisch getakteten und/oder binären - Magnetfeldsteuersignal gesteuert, derart, daß sie ein Magnetfeld erzeugen, das sich in Abhängigkeit vom Magnetfeldsteuersignal zeitlich ändert.

Die zu erfassende Potentialdifferenz enthält eine zeitlich veränderliche Nutzkomponente, deren momentane Spannungswerte von einer momentane Höhe der zu erfassenden Meßgröße - im Falle der Verwendung der Meßelektronik in einem MID infolge von durch Wechselwirkung des Magnetfelds mit der strömenden Flüssigkeit darin induzierten Ladungsverschiebungen (magnetohydrodynamischer Effekt, Faradaysche Induktion) - abhängig sind, mithin zeitlich veränderlich sind. Im Falle eines in der vorbeschrieben Weise getakteten Magnetfelds wechselt die Nutzkomponente zudem im Takte des Magnetfelds auch ihre Polarität.

Bei modernen MID ist die Meß- und Steuerschaltung typischerweise als eine die Potentialdifferenz zunächst analog-zu-digital wandelnde und hernach digital auswertender Mikrocomputer ausgebildet, nämlich als eine Meß- und Steuerschaltungen, die dafür eingerichtet ist, eine zwischen den beiden Signalspannungen der Eingangsschaltung existierende Spannungsdifferenz mit einer im Vergleich zur Taktrate für das Magnetfeld höheren Abtastrate und mit einer digitalen Auflösung von einigen, nominell zumeist 16 oder 24 Bit, in ein die Spannungsdifferenz repräsentierendes digitales Spannungsmeßsignal umzusetzen, also eine Folge von aus einem vorgegebenen gestuften Wertevorrat ausgewählten Digitalwerten, von denen jeder einen innerhalb eines vorgegebenen Umsetzbereichs liegenden quantisierten Meßwert für eine von der Spannungsdifferenz abhängige Potentialdifferenz repräsentiert.

Bei MID für die industriellen Meßtechnik, wie sie beispielsweise zur Messung der Volumendurchflußrate von in Rohrleitungen strömenden, oftmals nur eine geringe elektrische Leitfähigkeit von weniger als 1000 $\mu$S / cm (Mikrosiemens pro Zentimeter) aufweisenden Flüssigkeiten, wie z.B. Trinkwasser oder Abwasser, verwendet werden, erstreckt sich der Meßspannungsbereich, selbst bei innerhalb eines weiten nominellen Meßbereichs für die Strömungsgeschwindigkeit von $0.1.10^{-3}$ bis 10 m/s (Meter pro Sekunde), mithin in einem Dynamikbereich (relativer Meßbereich) von 1:10000 schwankender mittlerer Strömungsgeschwindigkeit, regelmäßig lediglich über weniger als 1 mV. Im Ergebnis dessen kann die Nutzkomponente gelegentlich einen minimalen, mithin meßtechnisch eben gerade noch aufzulösenden Spannungswert aufweisen, der in der Größenordnung von weniger als 10 nV (Nanovolt) liegt.

Wie u.a. in den eingangs erwähnten US-A 47 04 908 oder US-A 2005/0125168 diskutiert, enthält nämliche Potentialdifferenz regelmäßig zudem auch eine zumeist über einen im Vergleich zum Takt des Magnetfelds längeren Zeitraum zeitlich konstante bzw. sich im Vergleich zur Taktrate mit der Nutzkomponente zeitlich ändert, langsamer ändernden Störkomponente - etwa infolge elektrochemischer Prozesse im Bereich der einen oder andern Meßelektrode bzw. damit einhergehend zeitlich unvorhersehbar variierenden Ladungskonzentrationen im Bereich der jeweiligen Meßelektrode -, welche Störkomponente selbst innerhalb eines im Vergleich zum eigentlichen, der Schwankungsbreite der Nutzkomponente entsprechenden Meßspannungsbereich viel größeren, nämlich etwa zwischen -2 V (Volt) und +2 V liegenden, mithin einem Vielfachen des nominellen Meßbereichs betragenden Spannungsbereich variieren kann. Ohne entsprechende Maßnahmen ergibt sich im Ergebnis somit eine mittels der vorgenannten Meßschaltung effektiv, nämlich von deren die eigentliche Umsetzung vollziehenden Analog-zu-Digital-Wandlern, schlußendlich theoretisch zu leistende Auflösung, mit der die Potentialdifferenz in das digitale Spannungsmeßsignal umzusetzen ist, von mehr als $\log_2(2 \text{ V } / 10 \text{ nV})$ bzw. mehr als 27 Bit. Darüberhinaus erhöht sich die theoretisch zu leistende Auflösung infolge der realen Analog-zu-Digital-Wandlern regelmäßig innewohnenden Linearitätsfehler bzw. infolge der - nicht zuletzt der angestrebten hohen Empfindlichkeit geschuldeten - relativ hohen Eingangsverstärkung der die Potentialdifferenz, einschließlich Störkomponente, repräsentierenden Signalspannungen nochmals beträchtlich.

Im Ergebnis ergeben sich regelmäßig Anforderungen an die Auflösung, wie sie durch solche Meßelektroniken der in Rede stehenden Art, insb. auch solchen, wie sie in MID Verwendung finden, eigentlich zu leisten wären, die deutlich über den von typischerweise verwendeten Analog-zu-Digital-Wandlern nominell maximal bereitgestellten 24 Bit Auflösungen liegen bzw. erfordern diese limitierte nominelle Auflösung nämlicher Analog-zu-Digital-Wandler umgekehrt zwecks Vermeidung einer erheblichen Reduzierung der angestrebten Meßdynamik und/oder der angestrebten Meßgenauigkeit besondere Maßnahmen bei der der A/D-Wandlung vorgelagerten Signalbearbeitung.

Zur Vermeidung bzw. Reduzierung des Anteils der Störkomponente an den der Meß-Steuerschaltung zur Weiterverarbeitung zugeführten analogen Spannungen ist so beispielsweise in der eingangs erwähnten US-A 47 04 908 eine taktgesteuerte Beaufschlagung einer der Potentialdifferenz proportionalen analogen Meßspannung ausgangs einer als Differenzverstärker ausgebildeten Eingangsschaltung mit einer zur momentanen Störkomponente gegengleichen, diese quasi aus der analogen Meßspannung vollständig eliminierenden Kompensationsspannung beschrieben. Um einerseits die Störkomponente möglichst genauen erfassen und anderseits die Kompensationsspannung möglichst genau, gleichwohl möglichst rasch entsprechend Nachregeln zu können, bedarf es allerdings sehr aufwendiger Kompensationsschaltungen bzw. -verfahren, mit dem Ergebnis, daß die Genauigkeit und die Dynamik, mit der die Kompensationsspannung tatsächlich eingestellt wird unmittelbar in die Genauigkeit bzw. die Dynamik einfließt, mit der die Messung der eigentlichen Meßgröße - beispielsweise also der Volumendurchflußrate - erfolgen kann.

Ein anderer Lösungsansatz zielt ferner darauf ab, die Störkomponente bereits vor dem eigentlichen Abgreifen der Potentialdifferenz zu eliminieren oder zumindest nennenswert zu verringern. So wird beispielsweise in der US-A 2005/0125168 vorgeschlagen, das Potential der Flüssigkeit in einer die Störkomponente reduzierenden Weise zu verändern, indem mittels einer Steuerschaltung ein elektrisches Potential einer Referenzelektrode des Meßrohrs passend gesteuert, nämlich entsprechend angehoben oder abgesenkt, wird. Alternativ dazu zielt die US-B 67 08 569 darauf ab, die Störkomponente durch Beaufschlagung der Meßelektroden mit einer entsprechenden, hier gepulsten Kompensationsspannung zu reduzieren bzw. zu eliminieren. Als nachteilig bei diesen Lösungsansätzen ist jedoch besonders der Umstand anzusehen, daß - ohne die momentan zwischen den Meßelektroden tatsächlichen herrschende Ladungsverteilung genau genug zu kennen - die resultierenden Spannungen innerhalb der Flüssigkeit bzw. zwischen den Meßelektroden beeinflußt werden, mithin unkontrolliert in die innerhalb des Meßrohrs natürlich ablaufenden elektrochemischen Vorgänge eingegriffen werden muß.

Weiter offenbart US 5 907 103 A eine MID-Meßelektronik mit Referenzelektrode, Eingangsimpedanzwandlern und einer digitalen Auswertungsschaltung zur Kompensation sich langsam ändernder Störkomponenten, z. B. elektrochemischen Ursprungs.

Aus US 4 723 449 A ist eine Kompensationsschaltung zur Kompensation sich langsam ändernder Störkomponenten mittels Rückkopplung auf Eingangsimpedanzwandler bekannt.

Ausgehend davon besteht eine Aufgabe der Erfindung darin, Meßschaltungen der vorgenannten Art, nicht zuletzt auch solche, wie sie in MID Verwendung finden, dahingehend zu verbessern, daß damit zum einen eine einfache, gleichwohl effektive Kompensation der Störkomponente von weitgehend stromlos von Flüssigkeiten abzugreifenden Potentialdifferenzen und zwar ohne nennenswert auf elektrochemische Vorgänge innerhalb der zwischen den Meßelektroden geführten Flüssigkeit zurückzuwirken. Zum anderen soll mit der Erfindung auch eine Digitalisierung von in Potentialdifferenzen der in Rede stehenden Art enthaltenen, im Vergleich zur jeweiligen Störkomponenten typischerweise extrem kleinen, Nutzkomponenten mit einer hohen Auflösungen von weniger als 10 nV / Bit effektiv ermöglicht werden.

Zur Lösung der Aufgabe besteht die Erfindung in einer Meßelektronik zum Ermitteln einer, beispielsweise von einer einer Volumendurchflußrate einer einem Magnetfeld ausgesetzten strömenden Flüssigkeit abhängigen, Potentialdifferenz zwischen einer ein erstes elektrisches Potential aufweisenden ersten Meßelektrode und einer ein zweites elektrisches Potential aufweisenden zweiten Meßelektrode,

wobei nämliche Potentialdifferenz eine - beispielsweise mit einem vorgegebenen Takt - zeitlich veränderliche Nutzkomponente enthält, die kleiner als ein dafür vorgegebener maximaler Spannungswert und die größer als ein dafür vorgegebener minimaler Spannungswert ist, und wobei nämliche Potentialdifferenz eine zeitlich konstante bzw. sich im Vergleich zur Nutzkomponente - beispielsweise im Vergleich zu einer Taktrate, mit der die Nutzkomponente zeitlich ändert - langsamer ändernde Störkomponente enthält, die kleiner als ein dafür vorgegebener maximaler Spannungswert und die größer als ein dafür vorgegebener minimaler Spannungswert ist, und wobei der maximale Spannungswert der Störkomponente größer als der vorgegebene maximale Spannungswert der Nutzkomponente und der minimale Spannungswert der Störkomponente kleiner als der vorgegebene minimale Spannungswert der Nutzkomponente sind. Dafür umfaßt die Meßelektronik:

eine ein, beispielsweise festes, Bezugspotential aufweisende Referenzelektrode,
eine Eingangsschaltung mit einem mittels eines nicht-invertierenden Eingangs eines ersten Impedanzwandlers gebildeten, mit der ersten Meßelektrode elektrisch verbindbaren ersten Schaltungseingang, mit einem mittels eines nicht-invertierenden Eingangs eines zweiten Impedanzwandlers gebildeten, mit der zweiten Meßelektrode elektrisch verbindbaren zweiten Schaltungseingang, mit einem mittels eines Ausgangs des ersten Impedanzwandlers gebildeten ersten Signalspannungsausgang, und mit einem mittels eines Ausgangs des zweiten Impedanzwandlers gebildeten zweiten Signalspannungsausgang,
eine Kompensationsschaltung mit einem ersten Kompensationsspannungsausgang, mit einem zweiten Kompensationsspannungsausgang, und mit einem Steuersignaleingang, sowie
eine Meß- und Steuerschaltung mit einem mit dem ersten Signalspannungsausgang der Eingangsschaltung verbundenen ersten Signalspannungseingang, mit einem mit dem zweiten Signalspannungsausgang der Eingangsschaltung elektrisch verbundenen zweiten Signalspannungseingang, mit einem mit dem ersten Kompensationsspannungsausgang der Kompensationsschaltung elektrisch verbundenen dritten Signalspannungseingang, mit einem mit dem zweiten Kompensationsspannungsausgang der Kompensationsschaltung elektrisch verbundenen vierten Signalspannungseingang, und mit einem mit dem Steuersignaleingang der Kompensationsschaltung verbundenen Kompensationssteuerausgang.

Bei der erfindungsgemäßen Meßelektronik:

ist zudem die Eingangsschaltung dafür eingerichtet, am ersten Signalspannungsausgang eine auf das Bezugspotential bezogene, vom ersten elektrischen Potential abhängige erste Signalspannung und am zweitem Signalspannungsausgang eine auf das Bezugspotential bezogene, zumindest vom zweiten elektrischen Potential abhängige zweite Signalspannung bereitzustellen, beispielsweise derart, daß eine zwischen der ersten Signalspannung und der zweiten Signalspannung existierende Spannungsdifferenz einem vorgegebenen Vielfachen der Potentialdifferenz und/oder weniger als einem 5-fachen der Potentialdifferenz entspricht,
ist die Kompensationsschaltung dafür eingerichtet, am ersten Kompensationsspannungsausgang eine erste Kompensationsspannung, nämlich eine auf das Bezugspotential bezogene einstellbare erste Gleichspannung, und am zweiten Kompensationsspannungsausgang eine zweite Kompensationsspannung, nämlich eine auf das Bezugspotential bezogene, beispielsweise einstellbare oder fest eingestellte, zweite Gleichspannung, bereitzustellen, beispielsweise derart, daß eine zwischen der ersten Kompensationsspannung und der zweiten Kompensationsspannung existierende Spannungsdifferenz mehr als 25% eines momentanen Spannungswerts der Störkomponente entspricht, und

ist die Meß- und Steuerschaltung dafür eingerichtet, eine zwischen einer von sowohl der ersten Signalspannung als auch der ersten Kompensationsspannung abhängigen ersten kompensierten Signalspannung, und einer von sowohl der zweiten Signalspannung als auch der zweiten Kompensationsspannung abhängigen zweiten kompensierten Signalspannung existierende Spannungsdifferenz mit einer vorgebbaren - beispielsweise im Vergleich zur Taktrate, mit der die Nutzkomponente ändert, höheren -, Abtastrate und mit einer, beispielsweise mehr als 16 Bit betragenden, digitalen Auflösung in ein nämliche Spannungsdifferenz repräsentierendes digitales Spannungsmeßsignal, nämlich eine Folge von aus einem vorgegebenen gestuften Wertevorrat ausgewählten Digitalwerten von denen jeder einen innerhalb eines vorgegebenen Umsetzbereichs liegenden quantisierten Meßwert, der Spannungsdifferenz repräsentiert, umzusetzen.

Die Kompensationsschaltung der erfindungsgemäßen Meßelektronik weist wenigstens zwei mittels eines am Steuersignaleingang anlegbaren Kompensationssteuersignals auswählbare Betriebsmodi auf und ist ferner dafür eingerichtet, in einem ersten Betriebsmodus die erste Kompensationsspannung auf einen dafür vorgegebenen ersten Spannungswert und in einem zweiten Betriebsmodus die erste Kompensationsspannung auf einen dafür vorgegebenen zweiten Spannungswert, der größer als der für die erste Kompensationsspannung vorgegebene erste Spannungswert ist, einzustellen, während die Meß- und Steuerschaltung der erfindungsgemäßen Meßelektronik ferner dafür eingerichtet ist, am Kompensationssteuerausgang ein Kompensationssteuersignal zum Auswählen eines der auswählbaren Betriebsmodi der Kompensationsschaltung zwecks Selektion des für die aktuell vorliegende Störkomponente am besten geeigneten Betriebsmodus, bereitzustellen, nämlich derart, daß das Kompensationssteuersignal zum

Auswählen des ersten Betriebsmodes der Kompensationsschaltung einen nämlichem ersten Betriebsmode der Kompensationsschaltung entsprechenden ersten Signalwert aufweist, bzw. daß das Kompensationssteuersignal zum Auswählen des zweiten Betriebsmodes der Kompensationsschaltung einen nämlichem zweiten Betriebsmode der Kompensationsschaltung entsprechenden, vom ersten Signalwert verschiedenen zweiten Signalwert aufweist.

Darüberhinaus besteht die Erfindung in einem Meßsystem zum Ermitteln einer Volumendurchflußrate und/oder einer Strömungsgeschwindigkeit einer, beispielsweise einem vorübergehend konstanten Magnetfeld ausgesetzten und/oder in einer Rohrleitung strömenden, strömenden Flüssigkeit, welches Meßsystem eine solche Meßelektronik, ein Meßrohr zum Führen der Flüssigkeit, sowie zwei voneinander beabstandet am Meßrohr angeordnete, beispielsweise jeweils mit einer Elektrodenspitze in ein Lumen des Meßrohrs ragende, Meßelektroden, von denen eine erste Meßelektrode mit dem ersten Schaltungseingang der Eingangsschaltung verbunden ist und eine zweite Meßelektrode mit dem zweiten Schaltungseingang der Eingangsschaltung verbunden ist, umfaßt.

Nach einer ersten Ausgestaltung der Meßelektronik der Erfindung ist ferner vorgesehen, daß die digitale Auflösung, mit der die Spannungsdifferenz in das digitale Spannungsmeßsignal umgesetzt wird, mehr als 20 Bit beträgt.

Nach einer zweiten Ausgestaltung der Meßelektronik der Erfindung ist ferner vorgesehen, daß die Meß- und Steuerschaltung ferner dafür eingerichtet ist, das Kompensationssteuersignal auf den den ersten Betriebsmode der Kompensationsschaltung entsprechenden ersten Signalwert zu setzen und hernach wenigstens einen Digitalwert erster Art, nämlich einen während der erste Betriebsmode der Kompensationsschaltung ausgewählt ist generierten Digitalwert des digitalen Spannungsmeßsignals mit wenigstens einem, beispielsweise einem vorgegebenen Minimalwert für einen Meßwert der Spannungsdifferenz entsprechenden, vorgegebenen ersten Referenzwert zu vergleichen. Diese Ausgestaltung der Erfindung weiterbildend ist ferner vorgesehen, daß die Meß- und Steuerschaltung zudem dafür eingerichtet ist, ein Unterschreiten des ersten Referenzwerts, $U_{r1}$, durch nämlichen Digitalwert erster Art zu detektieren und hernach zum Erhöhen der Spannungsdifferenz, beispielsweise auf einen Meßwert der größer als ein dafür vorgegebener Minimalwert ist, das Kompensationssteuersignal auf den den zweiten Betriebsmode der Kompensationsschaltung entsprechenden zweiten Signalwert zu setzen, mithin den zweiten Betriebsmode der Kompensationsschaltung anzuwählen. Ferner kann die Meß- und Steuerschaltung noch dafür eingerichtet sein, wenigstens einen Digitalwert zweiter Art, nämlich einen während der zweite Betriebsmode der Kompensationsschaltung ausgewählt ist generierten Digitalwert des digitalen Spannungsmeßsignals, mit einem, beispielsweise einem vorgegebenen Maximalwert für einen Meßwert der Spannungsdifferenz entsprechenden, vorgegebenen zweiten Referenzwert, $U_{r2}$, zu vergleichen, beispielsweise auch derart, daß die Meß- und Steuerschaltung, falls sie ein Überschreiten des zweiten Referenzwerts durch nämlichen Digitalwert zweiter Art detektiert, zum Verringern der Spannungsdifferenz, beispielsweise auf einen Meßwert der kleiner als ein dafür vorgegebener Maximalwert ist, das Kompensationssteuersignal auf den den ersten Betriebsmode der Kompensationsschaltung entsprechenden ersten Signalwert setzt.

Nach einer dritten Ausgestaltung der Meßelektronik der Erfindung ist ferner vorgesehen, daß die Kompensationsschaltung und die Meß- und Steuerschaltung dafür eingerichtet sind, die Spannungsdifferenzkleiner als einen dafür vorgegebener, beispielsweise weniger als +5 V betragenden, Maximalwert und/oder größer als einen dafür vorgegebener, beispielsweise mehr als - 5 V betragenden, Minimalwert einzustellen, beispielsweise also die Spannungsdifferenz innerhalb des vorgegebenen Umsetzbereichs der Meß- und Steuerschaltung zu halten. Diese Ausgestaltung der Erfindung weiterbildend ist ferner vorgesehen, daß nämlicher Maximalwert einer oberen Intervallgrenze des Umsetzbereichs und nämlicher Minimalwert, einer unteren Intervallgrenze des Umsetzbereichs entsprechen und/oder daß der Umsetzbereich einer Differenz zwischen nämlichem Maximalwert und nämlichem Minimalwert entspricht.

Nach einer vierten Ausgestaltung der Meßelektronik der Erfindung ist ferner vorgesehen, daß die Kompensationsschaltung und die Meß- und Steuerschaltung dafür eingerichtet sind, die Spannungsdifferenz innerhalb des vorgegebenen Umsetzbereichs der Meß- und Steuerschaltung zu halten.

Nach einer fünften Ausgestaltung der Meßelektronik der Erfindung ist ferner vorgesehen, daß die Meß- und Steuerschaltung dafür eingerichtet ist, eine die Spannungsdifferenz repräsentierende Meßspannung zu erzeugen, beispielsweise derart, daß die Meßspannung kleiner als ein dafür vorgegebener, beispielsweise weniger als +5 V betragender, maximaler Spannungswert und/oder größer als ein dafür vorgegebener, beispielsweise mehr als -5V betragender, minimaler Spannungswert ist, und/oder daß die Meßspannung innerhalb eines vorgegebenen Meßspannungsbereichs, der kleiner als 5V ist, liegt. Diese Ausgestaltung der Erfindung weiterbildend ist ferner vorgesehen, daß die Meß- und Steuerschaltung dafür eingerichtet ist, die Meßspannung als ein Vielfaches der Spannungsdifferenz der Spannungsdifferenz auszugeben und/oder daß die Meß- und Steuerschaltung einen, beispielsweise mittels eines gegengekoppelten Differenzverstärkers gebildeten, Subtrahier mit einem invertierenden Signaleingang, mit einem nicht-invertierenden Signaleingangs und mit einem Meßspannungsausgang aufweist, welcher Subtrahierer beispielsweise dafür eingerichtet sein kann, die Meßspannung am Meßspannungsausgang bereitzustellen.

Nach einer sechsten Ausgestaltung der Meßelektronik der Erfindung ist ferner vorgesehen, daß die Meß- und Steuerschaltung einen, beispielsweise mittels eines gegengekoppelten Differenzverstärkers gebildeten, Subtrahier mit einem invertierenden Signaleingang, mit einem nicht-invertierenden Signaleingangs und mit einem Meßspannungsausgang aufweist und daß der erste und dritte Signalspannungseingang der Meß- und Steuerschaltung mittels des nicht-invertierenden Signaleingangs des Subtrahierers und der zweite und vierte Signalspannungseingang der Meß- und Steuerschaltung mittels des invertierenden Signaleingangs des Subtrahierers gebildet sind.

Nach einer siebenten Ausgestaltung der Meßelektronik der Erfindung ist ferner vorgesehen, daß die Meß- und Steuerschaltung einen mit der Abtastrate getakteten, beispielsweise eine nominelle Auflösung von mehr als 16 Bit aufweisenden, Analog-zu-Digital-Wandler mit einem Analogsignaleingang und mit einem Digitalsignalausgang aufweist. Diese Ausgestaltung der Erfindung weiterbildend ist ferner vorgesehen, daß der Analog-zu-Digital-Wandler eine nominelle Auflösung von 24 Bit aufweist.

Nach einer achten Ausgestaltung der Meßelektronik der Erfindung ist ferner vorgesehen, daß die Meß- und Steuerschaltung einen, beispielsweise mittels eines gegengekoppelten Differenzverstärkers gebildeten, Subtrahier mit einem invertierenden Signaleingang, mit einem nicht-invertierenden Signaleingangs und mit einem Meßspannungsausgang, sowie einen mit der Abtastrate getakteten, beispielsweise eine nominelle Auflösung von mehr als 16 Bit aufweisenden, Analog-zu-Digital-Wandler mit einem Analogsignaleingang und mit einem Digitalsignalausgang aufweist, und daß der Analogsignaleingang des Analog-zu-Digital-Wandlers mit dem Meßspannungsausgang des Subtrahierers elektrisch verbunden ist und der Analog-zu-Digital-Wandler dafür eingerichtet ist, das digitale Spannungsmeßsignal am Digitalsignalausgang bereitzustellen.

Nach einer neunten Ausgestaltung der Meßelektronik der Erfindung ist ferner vorgesehen, daß die Kompensationsschaltung dafür eingerichtet ist, im ersten Betriebsmodus die zweite Kompensationsspannung auf einen dafür vorgegebenen ersten Spannungswert einzustellen, der größer als der erste Spannungswert der ersten Kompensationsspannung, ist und/oder daß die Kompensationsschaltung dafür eingerichtet ist, im zweiten Betriebsmodus die zweite Kompensationsspannung auf einen dafür vorgegebenen zweiten Spannungswert einzustellen, der kleiner als der zweite Spannungswert der ersten Kompensationsspannung ist. Diese Ausgestaltung der Erfindung weiterbildend ist ferner vorgesehen, daß die Kompensationsschaltung dafür eingerichtet ist, im ersten Betriebsmodus die zweite Kompensationsspannung auf den Spannungswert und im zweiten Betriebsmodus die zweite Kompensationsspannung auf den Spannungswert einzustellen, derart, daß eine Kompensationsspannungsdifferenz, nämlich eine zwischen der ersten Kompensationsspannung und der zweiten Kompensationsspannung eingestellte Spannungsdifferenz, im ersten Betriebsmode einen Spannungswert annimmt, der verschieden ist von einem Spannungswert, den die Kompensationsspannungsdifferenz im zweiten Betriebsmode annimmt.

Nach einer zehnten Ausgestaltung der Meßelektronik der Erfindung ist ferner vorgesehen, daß die Kompensationsschaltung einen - ersten - Digital-zu-Analog-Wandler mit einem, beispielsweise das Steuersignal der Meß- und Steuerschaltung empfangenden und/oder den Steuersignaleingang der Kompensationsschaltung bildenden, Digitalsignaleingang und mit einem, beispielsweise die erste Kompensationsspannung liefernden und/oder den ersten Kompensationsspannungsausgang bildenden, Analogsignalausgang aufweist. Diese Ausgestaltung der Erfindung weiterbildend ist ferner vorgesehen, daß der erste Kompensationsspannungsausgang der Kompensationsschaltung mittels des Analogsignalausgangs des Digital-zu-Analog-Wandlers gebildet ist, beispielsweise indem der Analogsignalausgang des Digital-zu-Analog-Wandlers mit dem ersten Signalspannungsausgang der Eingangsschaltung unter Zwischenschaltung wenigstens eines Widerstandselements elektrisch verbunden ist und/oder daß der Digital-zu-Analog-Wandlers dafür eingerichtet ist, die erste Kompensationsspannung einzustellen, beispielsweise indem eine an dessen Analogsignalausgang eingestellte Gleichspannung einen Kompensationsstrom durch wenigstens ein mit dem Analogsignalausgang elektrisch verbundenes Widerstandselement treibt. Alternativ oder in Ergänzung dazu kann der Steuersignaleingang der Kompensationsschaltung auch mittels des Digitalsignaleingangs des Digital-zu-Analog-Wandlers gebildet sein und/oder kann der Digital-zu-Analog-Wandler auch dafür eingerichtet sein, an dessen Analogsignalausgang eine vom Steuersignal abhängige, veränderliche - als Kompensationsspannung dienende - Gleichspannung bereitzustellen. Darüberhinaus kann die Kompensationsschaltung ferner einen weiteren - zweiten - Digital-zu-Analog-Wandler mit einem, beispielsweise das Steuersignal der Meß- und Steuerschaltung empfangenden und/oder den Steuersignaleingang der Kompensationsschaltung bildenden, Digitalsignaleingang und mit einem, beispielsweise die zweite Kompensationsspannung liefernden und/oder den zweite Kompensationsspannungsausgang bildenden, Analogsignalausgang aufweisen.

Nach einer elften Ausgestaltung der Meßelektronik der Erfindung ist ferner vorgesehen, daß die Eingangsschaltung dafür eingerichtet ist, daß die erste Signalspannung am ersten Signalspannungsausgang auch von der zweiten Signalspannung am zweiten Signalspannungsausgang und die die zweite Signalspannung am zweiten Signalspannungsausgang auch von der ersten Signalspannung am ersten Signalspannungsausgang abhängig sind, beispielsweise derart, eine zwischen der ersten Signalspannung und der zweiten Signalspannung existierende Spannungsdifferenz proportional zur Potentialdifferenz ist.

Nach einer ersten Weiterbildung der erfindungsgemäßen Meßelektronik umfaßt diese weiters eine Versorgungsschaltung, das dafür eingerichtet ist eine, beispielsweise auf einen dafür vorgegeben Spannungswert geregelte und/oder konstante, Betriebsspannung zum Speisen der Eingangsschaltung, der Kompensationsschaltung sowie der Kompensationsschaltung bereitzustellen.

Nach einer ersten Ausgestaltung des Meßsystems der Erfindung ist ferner vorgesehen, daß die Meßelektroden eingerichtet sind, daß deren jeweiliges elektrisches Potential jeweils von einer in einer im Meßrohr geführten Flüssigkeit auftretenden, beispielsweise durch Ladungsträgerverschiebung innerhalb der Flüssigkeit bewirkten, elektrischen Spannung abhängig ist

Nach einer zweiten Ausgestaltung des Meßsystems der Erfindung ist ferner vorgesehen, daß die Meßelektroden entlang einer gedachten, beispielsweise kreisförmigen und/oder eine Querschnittsfläche des Meßrohrs umspannende, Umfangslinie des Meßrohrs voneinander beabstandet am Meßrohr angeordnet sind

Nach einer dritten Ausgestaltung des Meßsystems der Erfindung ist ferner vorgesehen, daß jede der Meßelektroden von einer im Meßrohr geführten Flüssigkeit kontaktierbar ist.

Nach einer vierten Ausgestaltung des Meßsystems der Erfindung ist ferner vorgesehen, daß die Meß- und Steuerschaltung dafür eingerichtet ist, mittels des digitalen Spannungsmeßsignals eine Folge von die Volumendurchflußrate jeweils momentan repräsentierenden Durchfluß-Meßwerten zu generieren. Diese Ausgestaltung der Erfindung weiterbildend ist ferner vorgesehen, daß die Meß- und Steuerschaltung dafür eingerichtet ist, mittels des digitalen Spannungsmeßsignals eine Spannungsdifferenzenfolge , nämliche eine Folge von Digitalwerten, von denen jeder eine Differenz zwischen jeweils zwei zeitlich aufeinanderfolgenden Digitalwerten des digitalen Spannungsmeßsignals repräsentiert, zu generieren, insb. derart, daß die Meß- und Steuerschaltung ferner auch dafür eingerichtet ist, eine Differenz zwischen während unterschiedlicher Betriebsmoden der Kompensationsschaltung generierten Digitalwerten des digitalen Spannungsmeßsignals repräsentierende Digitalwerte nicht zu generieren. Alternativ oder in Ergänzung dazu ist die Meß- und Steuerschaltung ferner dafür eingerichtet, die Folge von die Volumendurchflußrate jeweils momentan repräsentierenden Durchfluß-Meßwerten mittels der Spannungsdifferenzenfolge zu generieren, inbs. derart, daß die Meß- und Steuerschaltung solche Digitalwerte der Spannungsdifferenzenfolge nicht bei der Ermittlung eines Durchfluß-Meßwerts verwendet, die jeweils eine Differenz zwischen während unterschiedlicher Betriebsmoden der Kompensationsschaltung generierten Digitalwerten des digitalen Spannungsmeßsignals repräsentieren.

Nach einer ersten Weiterbildung des erfindungsgemäßen Meßsystems umfaßt dieses weiters einen Magnetfeldgenerator mit einem Steuersignaleingang, wobei der Magnetfeldgenerator dafür eingerichtet ist, ein ein Lumen des Meßrohrs, beispielsweise auch innerhalb eines sich zwischen den Meßelektroden erstreckenden Bereichs, zumindest teilweise durchsetzendes Magnetfeld zu erzeugen, das sich in Abhängigkeit von einem dem Steuersignaleingang anlegbaren Magnetfeldsteuersignal ändert, beispielsweise derart, daß das Magnetfeld eine senkrecht zu einer die beiden Meßelektroden imaginär verbindenden gedachten Verbindungsachse verlaufende, die Nutzkomponente der Potentialdifferenz beeinflussende Nutzkomponente mit einer mit einer Taktrate periodisch ändernden Magnetfeldrichtung aufweist. Nach einer Ausgestaltung dieser Weiterbildung des erfindungsgemäßen Meßsystems weist die Meß- und Steuerschaltung der Meßelektronik einen mit dem Steuersignaleingang des Magnetfeldgenerators verbundenen Magnetfeldsteuersignalausgang auf und ist nämliche Meß- und Steuerschaltung dafür eingerichtet, am Magnetfeldsteuersignalausgang ein, beispielsweise periodisch getaktetes, Magnetfeldsteuersignal bereitzustellen. Diese Ausgestaltung der Erfidnung weiterbildend ist ferner vorgesehen, daß das Magnetfeldsteuersignal als ein Rechtecksignal ausgebildet ist und/oder daß das Magnetfeldsteuersignal eine taktweise, beispielsweise periodische, Änderung des vom Magnetfeldgenerator erzeugten Magnetfelds bewirkt, etwa derart, daß die Nutzkomponente der Nutzkomponente des Magnetfeldes eine mit einer Taktrate periodisch ändernden Magnetfeldrichtung aufweist. Dementsprechend kann die Meß- und Steuerschaltung, auch dafür eingerichtet sein, das Magnetfeldsteuersignal als ein mit der Taktrate periodisch getaktetes Rechtecksignal auszugeben.

Ein Grundgedanke der Erfindung besteht darin, eine hochauflöste Digitalisierung der Nutzkomponenten von Potentialdifferenzen der in Rede stehenden Art, nämlich möglichst mit weniger als 10 nV / Bit, dadurch auch mit solchen A/D-Wandlern, die vergleichsweise geringe nominelle Auflösung von 24 Bit oder weniger aufweisen, bzw. damit gebildeten Meß- und Steuerschaltungen zu ermöglichen, daß zum einen jede von zwei von den zu messenden Potentialen abgeleiteten Signalspannungen mittels einer jeweils überlagernden Kompensationsspannung soweit verändert wird, daß im Ergebnis eine die originale Nutzkomponente enthaltende Spannungsdifferenz lediglich eine reduzierte, nämlichen an den nominellen Umsetzbereich der - beispielsweise mittels eines 24 Bit A/D-Wandlers gebildeten, mithin lediglich einen effektiv Umsetzbereich von weniger als $2^{24} \cdot 10$ nV aufweisenden - Meß- und Steuerschaltung angepaßte Störkomponente enthält, und daß zum anderen die jeweilige Kompensationsspannung jeweils auf einen aus einer relativ geringen, beispielsweise nur $2^0$, $2^1$ oder $2^3$ betragenden, Anzahl vorgegebener diskreter Spannungswerte ausgewählten Spannungswert eingestellt wird.

Der jeweils aktuell neu zu setzende Spannungswert kann hierbei idealerweise so gewählt sein, daß im Ergebnis die aktuell umzusetzende Spannungsdifferenz einen Spannungswert aufweist, der möglichst genau der Hälfte des Umsetzbereichs des A/D-Wandlers entspricht, mithin für die Digitalisierung der im Vergleich zur Störkomponente potentiell sehr rasch bzw. über einen weiten Meßspannungs- bzw. Dynamikbereich ändernde Nutzkomponente aktuell nahezu der halbe Umsetzbereich des A/D-Wandlers genutzt werden kann. Aufgrund dessen, daß die Störkomponente sich im Vergleich zur Nutzkomponente zumeist nur relativ langsam ändert, kann der für die jeweilige Kompensationsspannung einstweilen jeweils gesetzte Spannungswert über einen vergleichsweise lange Zeitraum (>1 s) belassen bzw. kann mit dem Setzen eines anderen Spannungswerts entsprechend lange zugewartet werden, beispielsweise solange, bis die Spannungsdifferenz einen Spannungswert annimmt, der etwa einem Viertel oder drei Viertel des Umsetzbereichs des A/D-Wandlers bzw. der damit gebildeten Meß- und Steuerschaltung entspricht.

Die Erfindung sowie weitere vorteilhafte Ausgestaltungen und Zweckmäßigkeiten davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich.

Im einzelnen zeigen:

Fig. 1      schematisch nach Art eines Blockschaltbildes ein Ausführungsbeispiel einer erfindungsgemäßen Meßelektronik mit einer Kompensationsschaltung bzw. eines damit gebildeten Meßsystems;

Fig. 2      schematisch nach Art eines Blockschaltbildes eine für eine Meßelektronik bzw. Meßsystem gemäß Fig. 1 geeigneten Kompensationsschaltung; und

Fig. 3, 4   schematisch nach Art eines Blockschaltbildes jeweils eine weitere Variante einer für eine Meßelektronik bzw. Meßsystem gemäß Fig. 1 geeigneten Kompensationsschaltung.

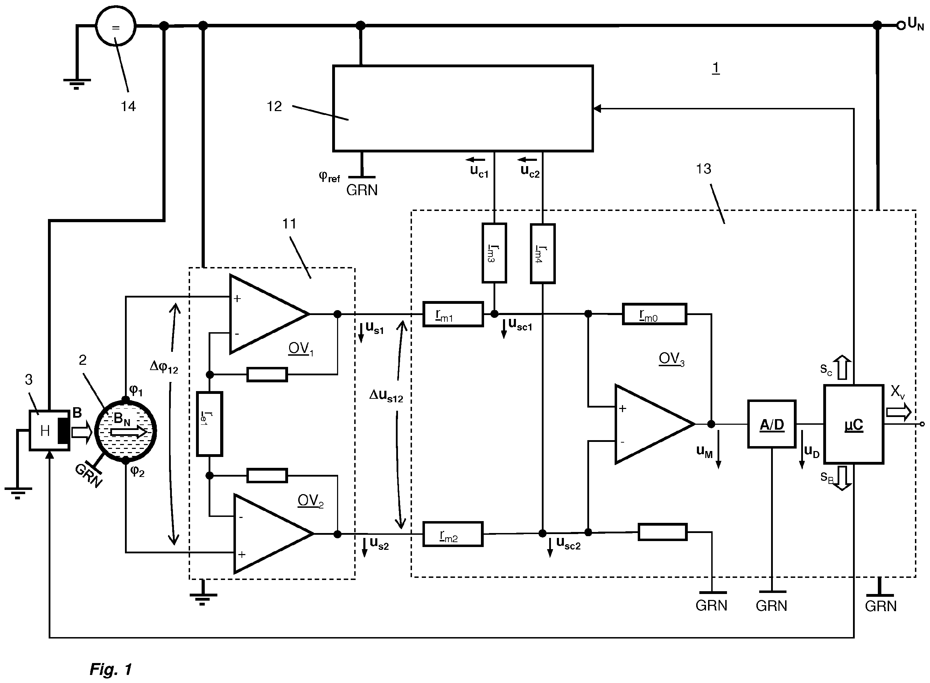

In der Fig. 1 ist ein Ausführungsbeispiel für eine Meßelektronik 1 zum Ermitteln einer Potentialdifferenz $\Delta\varphi_{12}$ zwischen einer ein erstes elektrisches Potential $\varphi_1$ aufweisenden ersten Meßelektrode und einer ein zweites elektrisches Potential $\varphi_2$ aufweisenden zweiten Meßelektrode schematisch dargestellt. Die zu ermittelnde Potentialdifferenz $\Delta\varphi_{12}$ weist eine - beispielsweise mit einer von einer in einer Leitung strömenden Flüssigkeit zu erfassenden physikalischen Meßgröße korrespondierende - zeitlich veränderliche Nutzkomponente $\Delta\varphi_N$ sowie gelegentlich auch eine - beispielsweise durch elektrochemische Vorgänge an einer Grenzfläche zwischen vorgenannter Flüssigkeit und den Meßelektroden verursachte - zeitlich veränderliche Störkomponente $\Delta\varphi_S$ auf, die zur weiteren Erläuterung der Erfindung als zeitgleich mit der Nutzkomponente $\Delta\varphi_N$ auftretend, mithin als letzterer überlagernd angenommen ist, derart, daß die Nutzkomponente $\Delta\varphi_N$ kleiner als ein - anwendungsbedingt - dafür vorgegebener, beispielsweise bei etwa +1 mV liegender, maximaler Spannungswert, $\Delta\varphi_{NMAX}$, und größer als ein -anwendungsbedingt - dafür vorgegebener, beispielsweise bei etwa -1 mV liegender, minimaler Spannungswert, $\Delta\varphi_{NMIN}$, ist, und daß die Störkomponente $\Delta\varphi_S$ kleiner als ein - anwendungsbedingt - dafür vorgegebener maximaler Spannungswert, $\Delta\varphi_{SMAX}$, der größer als der vorgegebene maximale Spannungswert, $\Delta\varphi_{NMAX}$, der Nutzkomponente $\Delta\varphi_N$ ist, beispielsweise nämlich etwa bei $\Delta\varphi_{SMAX} = +2$ V liegen kann und größer als ein -anwendungsbedingt - dafür vorgegebener minimaler Spannungswert, $\Delta\varphi_{SMIN}$, der kleiner als der vorgegebene minimale Spannungswert, $\Delta\varphi_{NMIN}$, der Nutzkomponente $\Delta\varphi_N$ ist, beispielsweise nämlich etwa bei $\Delta\varphi_{NMIN}$ = -2 V liegen, ist. Darüberhinaus kann angenommen werden, daß die Nutzkomponente $\Delta\varphi_N$ regelmäßig auch solche Spannungswerte annehmen kann, die in der Größenordnung von einigen wenigen Nanovolt, beispielsweise also bei $\pm 10$ nV, liegen. Im Ergebnis kann also die Potentialdifferenz $\Delta\varphi_{12}$ ein Verhältnis der Störkomponente zur Nutzkomponente aufweisen, das im Extremfall durchaus mehr als 2 V / 10 nV betragen kann. Im besonderen kann ferner angenommen werden, daß die Störkomponente $\Delta\varphi_S$ sich zwar in unvorhersehbarer Weise innerhalb des vorgegebenen Schwankungsbereichs zeitlich ändert, jedoch im Vergleich zur Nutzkomponente erheblich langsamer, derart, daß sie für einen gewissen Zeitraum, während dem sich die Nutzkomponente $\Delta\varphi_N$ signifikant ändert, näherungsweise als konstant angesehen werden kann.

Die Meßelektronik 1 weist, wie in Fig. 1 schematisch angedeutet, eine Versorgungsschaltung 14 auf, die dafür eingerichtet ist, eine zum einen der Versorgung weiterer Komponenten 11, 12, 13 der Meßelektronik mit der für deren Betrieb notwendigen elektrischen Energie und zum anderen als Referenz für Ermittlung der Potentialdifferenz $\Delta\varphi_{12}$ dienende Betriebsspannung, nämlich eine auf einen, insb. möglichst konstant auf einen dafür vorgegeben Nominalwert, beispielsweise 5 V, geregelten, Spannungswert $U_N$ aufweisende, beispielsweise unipolare oder bi-polare, Gleichspannung, bereitzustellen.

Zum Erfassen der Potentiale $\varphi_1$, $\varphi_2$ an den beiden Meßelektroden weist die Meßelektronik 1 ferner eine Eingangsschaltung 11 mit einem mit der ersten Meßelektrode elektrisch verbundenen ersten Schaltungseingang und mit einem mit der zweiten Meßelektrode elektrisch verbundenen zweiten Schaltungseingang auf. Die Eingangsschaltung 11 ist dafür vorgesehen, an einem ersten Signalspannungsausgang eine auf ein an einer entsprechenden Referenzelektrode GRN der Meßelektronik anliegendes - beispielsweise $0.5 \cdot U_N$ und/oder 0 Volt betragendes - Bezugspotential $\varphi_{Ref}$, bezogene, zumindest vom ersten elektrischen Potential $\varphi_1$ abhängige erste Signalspannung $u_{s1}$ und an einem zweitem Signalspannungsausgang eine ebenfalls auf das Bezugspotential $\varphi_{Ref}$ bezogene, zumindest vom zweiten elektrischen Potential $\varphi_2$ abhängige zweite Signalspannung $u_{s2}$ zu liefern. Zwecks der Bereitstellung eines möglichst hohen Eingangswiderstandes für jeden der beiden Schaltungseingänge der Eingangsschaltung sind der erste Schaltungseingang mittels eines nicht-invertierenden Eingangs eines ersten Impedanzwandlers $OV_1$, von dem ein Ausgang als erster Signalausgang der Eingangsschaltung dient, und der zweite Schaltungseingang mittels eines nicht-invertierenden Eingangs eines zweiten Impedanzwandlers $OV_2$, von dem ein Ausgang als zweiter Signalausgang der Eingangsschaltung dient, gebildet.

Im hier gezeigten Ausführungsbeispiel sind die beiden Impedanzwandler $OV_1$, $OV_2$ zusätzlich mittels eines die invertierenden Eingänge beider Impedanzwandler elektrisch verbindenden Widerstandselementss $r_{e1}$ zu einem Differenzverstärker mit einer sehr guten, nämlich von der schlußendlich dafür eingestellten Verstärkung weitgehend unabhängigen Gleichtaktunterdrückung zusammengeschaltet. Im Ergebnis ist die Eingangsschaltung zwar so ausgestaltet, daß die erste Signalspannung $u_{s1}$ am ersten Signalspannungsausgang auch von der zweiten Signalspannung $u_{s2}$ am zweiten Signalspannungsausgang und die die zweite Signalspannung $u_{s2}$ am zweiten Signalspannungsausgang auch von der ersten Signalspannung $u_{s1}$ am ersten Signalspannungsausgang abhängig sind, dies hier aber derart, daß eine zwischen der ersten Signalspannung $u_{s1}$ und der zweiten Signalspannung $u_{s2}$ existierende Spannungsdifferenz $\Delta u_{s12}$ proportional zur eigentlich interessierenden Potentialdifferenz $\Delta\varphi_{12}$ ist, mithin einem vorgebbaren Vielfachen $V_1$ der Potentialdifferenz $\Delta\varphi_{12}$ bzw. jeweils der nämliche Potentialdifferenz $\Delta\varphi_{12}$ bildenden Nutz- und Störkomponenten entspricht. Die Verstärkung $V_1$, mit der die Eingangsschaltung die Potentialdifferenz $\Delta\varphi_{12}$ verstärkt, ist vorzugsweise so eingestellt, daß sie weniger als einem 5-fachen der Potentialdifferenz $\Delta\varphi_{12}$ entspricht, mithin $V_1 < 5$ gilt.

Zur Weiterverarbeitung und Auswertung der mittels der Eingangsschaltung 11 generierten Signalspannungen umfaßt die erfindungsgemäße Meßelektonik 1 weiters eine Meß- und Steuerschaltung 13 mit einem mit dem ersten Signalspannungsausgang der Eingangsschaltung verbundenen, mithin die erste Signalspannung empfangenden ersten Signalspannungseingang und mit einem mit dem zweiten Signalspannungsausgang der Eingangsschaltung elektrisch verbundenen, mithin die zweite Signalspannung empfangenden zweiten Signalspannungseingang.

Darüberhinaus umfaßt die Meßelektonik 1 zwecks der Reduzierung der in den beiden Signalspannungen $u_{s1}$, $u_{s2}$ ausgangs der Eingangsschaltung bzw. in deren Spannungsdifferenz $\Delta u_{s12}$ zunächst immer noch enthaltenen Störkomponenten - und zwar im gleichen, beispielsweise also 2 V / 10 nV betragenden, Verhältnis zur Nutzkomponenten wie in der Potentialdifferenz $\Delta\varphi_{12}$ - eine Kompensationsschaltung 12 mit einem ersten Kompensationsspannungsausgang, der mit einem dritten Signalspannungseingang der Meß- und Steuerschaltung elektrisch verbunden ist, und mit einem zweiten Kompensationsspannungsausgang, der mit einem vierten Signalspannungseingang der Meß- und Steuerschaltung 13 elektrisch verbunden ist. Die Kompensationsschaltung 12 ist dafür eingerichtet, am ersten Kompensationsspannungsausgang eine erste Kompensationsspannung $u_{c1}$, nämlich eine auf das Bezugspotential $\varphi_{Ref}$ bezogene einstellbare erste Gleichspannung, und am zweiten Kompensationsspannungsausgang eine zweite Kompensationsspannung $u_{c2}$, nämlich eine auf das Bezugspotential $\varphi_{Ref}$ bezogene - beispielsweise ebenfalls einstellbare oder aber fest eingestellte, - zweite Gleichspannung, bereitzustellen. Die von der Kompensationsschaltung gelieferten Kompensationsspannungen $u_{c1}$, $u_{c21}$ können beispielsweise so gewählt und eingestellt sein, daß eine Summation, $\sum u_{c12} = u_{c1} + u_{c2}$, beider Kompensationsspannungen $u_{c1}$, $u_{c2}$ stets einem vorgegebenen Konstantwert, beispielsweise der Hälfte einer Differenz zwischen dem für die Betriebsspannung eingestellten Spannungswert $U_N$ und dem Bezugspotential $\varphi_{Ref}$ oder beispielsweise auch 0 V, entspricht.

Die Meß- und Steuerschaltung 13 der erfindungsgemäßen Meßelektronik ist im besonderen dafür eingerichtet, eine Spannungsdifferenz $\Delta u_{12}$ zwischen einer von sowohl der ersten Signalspannung $u_{s1}$ als auch der ersten Kompensationsspannung $u_{c1}$ abhängigen, nämlich einer gewichteten Summation nämlicher Signal- und Kompensationsspannung entsprechenden, ersten kompensierten Signalspannung $u_{sc1}$, und einer von sowohl der zweiten Signalspannung $u_2$ als auch der zweiten Kompensationsspannung $u_{c2}$ abhängigen, nämlich einer gewichteten Summation nämlicher Signal- und Kompensationsspannung entsprechenden, zweiten kompensierten Signalspannung $u_{sc2}$, mithin eine zur Spannungsdifferenz $\Delta u_{s12}$ proportionale Spannung, $u_{sc1}-u_{sc2}$, mit einer vorgebbaren Abtastrate, $f_A$, und mit einer - idealerweise mehr als 16 Bit, insb. mehr als 20 Bit, betragenden - digitalen Auflösung, N, in ein nämliche Spannungsdifferenz $\Delta u_{12}$ repräsentierendes digitales Spannungsmeßsignal $u_D$, umzusetzen, also eine Folge von aus einem vorgegebenen gestuften Wertevorrat ausgewählten Digitalwerten, $U_D$, zu generieren, von denen jeder einen innerhalb eines vorgegebenen - beispielsweise weniger als 5 V betragenden - Umsetzbereichs, $\Delta U_{12}$, liegenden quantisierten Meßwert, $U_{12}$, der Spannungsdifferenz $\Delta u_{12}$ repräsentiert. Nach einer weiteren Ausgestaltung der Erfindung ist dafür in der Meßelektronik ein mit der Abtastrate, $f_A$, getakteter Analog-zu-Digital-Wandler A/D vorgesehen, der dafür eingerichtet ist, das digitale Spannungsmeßsignal $u_D$ an einem Digitalsignalausgang bereitzustellen. Der Analog-zu-Digital-Wandler A/D ist weist vorzugsweise eine nominelle Auflösung von mehr als 16 Bit, beispielsweise 24 Bit, auf und kann beispielsweise ADS1246 von der Firma Texas Instruments, Inc. sein.

Nach einer anderen Ausgestaltung der Erfindung weist die Meß- und Steuerschaltung 13 zum Erzeugen einer die Spannungsdifferenz $\Delta u_{12}$ zunächst analog repräsentierenden Meßspannung $u_M$ einen - beispielsweise auch volldifferentiellen und/oder, wie in Fig. 1 schematisch dargestellt, mittels wenigstens eines via Widerstandelement $r_{m0}$ gegengekoppelten Differenzverstärkers gebildeten - Subtrahier $OV_3$ mit einem invertierenden Signaleingang "-", mit einem nicht-invertierenden Signaleingang "+" und mit einem Meßspannungsausgang für die analoge Meßspannung $u_M$ auf. Im hier gezeigten Ausführungsbeispiel sind, zwecks der Bildung eines Mehrfach-Subtrahierers für die Signal- und Kompensationsspannungen $u_{s1}$, $u_{s2}$, $u_{c1}$, $u_{c2}$, der erste Signalspannungseingang der Meß- und Steuerschaltung 13 mittels des nicht-invertierenden Signaleingangs des Subtrahierers sowie eines daran angeschlossenen ersten eingangsseitigen Widerstandelement $r_{m1}$, der zweite Signalspannungseingang der Meß- und Steuerschaltung mittels des invertierenden Signaleingangs des Subtrahierers sowie eines daran angeschlossenen zweiten eingangsseitigen Widerstandelement $r_{m2}$, der dritte Signalspannungseingang der Meß- und Steuerschaltung mittels des nicht-invertierenden Signaleingangs des Subtrahierers sowie eines daran angeschlossenen dritten eingangsseitigen Widerstandelement $r_{m3}$, und der vierte Signalspannungseingang der Meß- und Steuerschaltung mittels des invertierenden Signaleingangs des Subtrahierers sowie eines daran angeschlossenen vierten eingangsseitigen Widerstandelement $r_{m4}$ gebildet. Vorzugsweise sind die nämliche Widerstandelement $r_{m1}$, $r_{m2}$, $r_{m3}$, $r_{m4}$ so bemessen, daß ein ohmscher Widerstand $R_{m1}$ des Widerstandelements $r_{m1}$ gleich einem ohmschem Widerstand $R_{m2}$ des Widerstandelements $r_{m2}$ und ein ohmscher Widerstand $R_{m3}$ des Widerstandelements $r_{m3}$ gleiche einem ohmschen Widerstand $R_{m4}$ des Widerstandelements $r_{m4}$ sind.

Ferner ist im in Fig. 1 gezeigten Ausführungsbeispiel der Meßspannungsausgang des Subtrahierers mit einem Analogsignaleingang eines Analog-zu-Digital-Wandlers A/D elektrisch verbunden, so daß dieser also die Meßspannung $u_M$ zwecks nachfolgender Digitalisierung empfängt. Nach einer weiteren Ausgestaltung der Erfindung ist nämlicher Subtrahierer dafür vorgesehen, mithin ist die Meß- und Steuerschaltung ferner dafür eingerichtet, die Meßspannung $u_M$ als ein - beispielsweise mehr als einem 3-fachen entsprechendem - Vielfaches $V_2$ der Spannungsdifferenz $\Delta u_{12}$ auszugeben. Ein dem entsprechender Verstärkungsfaktor des Subtrahierers kann beispielsweise fest vorgegeben sein oder aber auch im Meßbetrieb stufenweise einstellbar sein. Dies im besonderen auch derart, daß die Meßspannung $u_M$ stets kleiner als ein dafür vorgegebener, beispielsweise weniger als +5 V betragender, maximaler Spannungswert, $U_{MMax}$, bzw. stets größer als ein dafür vorgegebener, beispielsweise mehr als -5V oder beispielsweise auch 0 Volt betragender, minimaler Spannungswert, $U_{MMin}$, ist, bzw. derart, daß die Meßspannung $u_M$ stets innerhalb eines vorgegebenen - beispielsweise sich von -5 Volt bis +5 V oder von 0 Volt bis +5V erstreckenden - Meßspannungsbereichs, $\Delta U_M = U_{MMax} - U_{MMin}$, liegt. Alternativ zum vorbeschrieben "analogen" Subtrahierer mit nachgeschaltetem Analog-zu-Digital-Wandlers A/D kann aber beispielsweise auch ein 2, beispielsweise auch differentielle, Analogsignaleingänge aufweisender Analog-zu-Digital-Wandler verwendet werden, dem an einem ersten Analogsignaleingang die erste kompensierte Signalspannung $u_{sc1}$ und an einem zweiten Analogsignaleingang die zweite kompensierte Signalspannung $u_{sc2}$ zugeführt sind und der die an einem Digitalausgang das den zeitlichen Verlauf der Spannungsdifferenz $\Delta u_{12}$ repräsentierende digitale Spannungsmeßsignal $u_D$ liefert, beispielsweise also ein A/D-Wandler vom Typ AD7793 von Analog Devices, Inc.

Die Kompensationsschaltung 12 der erfindungsgemäßen Meßelektronik 1 ist ferner so ausgestaltet, daß sie wenigstens zwei mittels eines an einem in der darin vorgesehenen Steuersignaleingang anlegbaren Kompensationssteuersignals $s_c$ auswählbare Betriebsmodi aufweist, derart, daß die Kompensationsschaltung 12 nämlich in einem ersten Betriebsmodus die erste Kompensationsspannung $u_{c1}$ auf einen dafür vorgegebenen ersten Spannungswert, $U_{c11}$, einstellt, und daß die Kompensationsschaltung in einem zweiten Betriebsmodus die erste Kompensationsspannung

$u_{c1}$ auf einen dafür vorgegebenen zweiten Spannungswert, $U_{c12}$, der größer als der für die erste Kompensationsspannung $u_{c1}$ vorgegebene erste Spannungswert, $U_{c11}$, ist, einstellt. Nach einer weiteren Ausgestaltung der Erfindung ist die Kompensationsschaltung ferner dafür eingerichtet, im ersten Betriebsmodus die zweite Kompensationsspannung $u_{c2}$ auf einen dafür vorgegebenen ersten Spannungswert, $U_{c21}$, einzustellen, der größer als der erste Spannungswert, $U_{c11}$, der ersten Kompensationsspannung $u_{c1}$, ist. Alternativ oder in Ergänzung kann die Kompensationsschaltung auch dafür eingerichtet sein, im zweiten Betriebsmodus die zweite Kompensationsspannung $u_{c2}$ auf einen dafür vorgegebenen zweiten Spannungswert, $U_{c22}$, einzustellen, der kleiner als der zweite Spannungswert, $U_{c12}$, der ersten Kompensationsspannung $u_{c1}$, ist. Nach einer weiteren Ausgestaltung der Erfindung ist die Kompensationsschaltung ferner dafür eingerichtet, im ersten Betriebsmodus die zweite Kompensationsspannung $u_{c2}$ auf den Spannungswert, $U_{c21}$, und im zweiten Betriebsmodus die zweite Kompensationsspannung $u_{c2}$ auf den Spannungswert, $U_{c22}$, einzustellen, derart, daß eine Kompensationsspannungsdifferenz $\Delta u_{c12}$, nämlich eine zwischen der ersten Kompensationsspannung $u_{c1}$ und der zweiten Kompensationsspannung $u_{c2}$ eingestellte Spannungsdifferenz $u_{c1} - u_{c2}$, im ersten Betriebsmode einen Spannungswert $U_{c11} - U_{c21}$ annimmt, der verschieden ist von einem Spannungswert $U_{c12} - U_{c22}$, den nämliche Kompensationsspannungsdifferenz $\Delta u_{c12}$ im zweiten Betriebsmode annimmt, beispielsweise auch derart, daß der Spannungswert $U_{c12} - U_{c22}$ größer als der Spannungswert $U_{c11} - U_{c21}$ ist. Die Kompensationsschaltung 12 ist gemäß einer weiteren Ausgestaltung ferner so ausgelegt, daß ein größter nominell damit einstellbarer, nicht zuletzt auch von der Höhe der Betriebsspannung abhängiger Spannungswert $\Delta U_{c12MAX}$ für die Kompensationsspannungsdifferenz $\Delta u_{c12}$ so gewählt ist, daß nämlicher Spannungswert $\Delta U_{c12MAX}$ in Abhängigkeit von einem für die Spannungsdifferenz $\Delta u_{s12}$ ausgangs der Eingangsschaltung 11 potentiell zu erwartenden Maximalwert $\Delta U_{s12MAX}$ die Bedingung:

$$\Delta U_{c12MAX} \geq \frac{R_{m3} + R_{m4}}{R_{m1} + R_{m2}} \cdot \Delta U_{s12MAX}$$

erfüllt. Der Maxiamlwert $\Delta u_{s12MAX}$ entspricht für das in Fig. 1 gezeigte Ausführungsbeispiel im wesentlichen dem Vielfachen $V_1$ des maximalen Spannungswerts, $\Delta \varphi_{SMAX}$, der Störkomponente $\Delta \varphi_S$. Dies nicht zuletzt deshalb, um einerseits bei gegebener Betriebsspannung $U_N$ eine möglichst hohe Verstärkung $V_1$, mit der die Eingangsschaltung die Potentialdifferenz $\Delta \varphi_{12}$ verstärkt, realisieren zu können, nämlich möglichst in der Größenordnung von $(U_N - \varphi_{REf})/\Delta \varphi_{12}$, und anderseits die Kompensationsschaltung 12 nur mit einer möglichst geringen Anzahl an Betriebsmoden ausstatten zu müssen. Für den vorbeschriebenen Fall, daß die Widerstandselemente $r_{m1}$, $r_{m2}$, $r_{m3}$, $r_{m4}$ der Meß- und Steuerschaltung 13 so bemessen sind, daß deren ohmsche Widerstände paarweise gleich sind, nämlich mit $R_{m1} = R_{m2}$ und mit $R_{m3} = R_{m4}$, ergibt sich der Spannungswert $\Delta U_{c12MAX}$ dementsprechend auch zu:

$$\Delta U_{c12MAX} \geq \frac{R_{m3}}{R_{m1}} \cdot \Delta U_{s12MAX} \cdot$$

Unter der Maßgabe, daß die Kompensationsschaltung 12 letztlich dafür eingerichtet sein soll, daß die davon bereitgestellten Kompensationsspannungen bzw. die davon bereitgestellte Kompensationsspannungsdifferenz $\Delta u_{c12}$ stets ausreichend sind, um einen vorgegebenen Kompensationsgrad k zu erreichen, nämlich mindestens einen vorgegebenen prozentualen Anteil der jeweiligen Spannungsdifferenz $\Delta u_{s12}$, zu kompensieren, ergibt sich dementsprechend für die erwähnten Widerstandselemente $r_{m1}$, $r_{m2}$, $r_{m3}$, $r_{m4}$ als eine weitere Forderung für die Bemessung von deren ohmschen Widerständen $R_{m1}$, $R_{m2}$, $R_{m3}$, und $R_{m4}$ desweiteren:

$$\frac{R_{m1}}{R_{m3}} = \frac{R_{m2}}{R_{m4}} = k \cdot \frac{\Delta U_{s12MAX}}{\Delta U_{c12MAX}} \cdot$$

Nach einer weiteren Ausgestaltung der Erfindung ist die Kompensationsschaltung 12, abgestimmt auf die Meß- und Steuerschaltung 13, so eingerichtet, daß die zwischen der ersten Kompensationsspannung und der zweiten Kompensationsspannung existierende Spannungsdifferenz mehr als 25% eines momentanen Spannungswerts der Störkomponente entspricht, mithin ein Kompensationsgrad k erreicht wird, der mehr als 0,25 beträgt, dies im besonderen auch für den Fall, daß die Störkomponente ihren vorgegebenen maximalen Spannungswert, $\Delta \varphi_{NMAX}$, oder ihren vorgegebenen minimaler Spannungswert, $\Delta \varphi_{SMIN}$, erreicht hat.

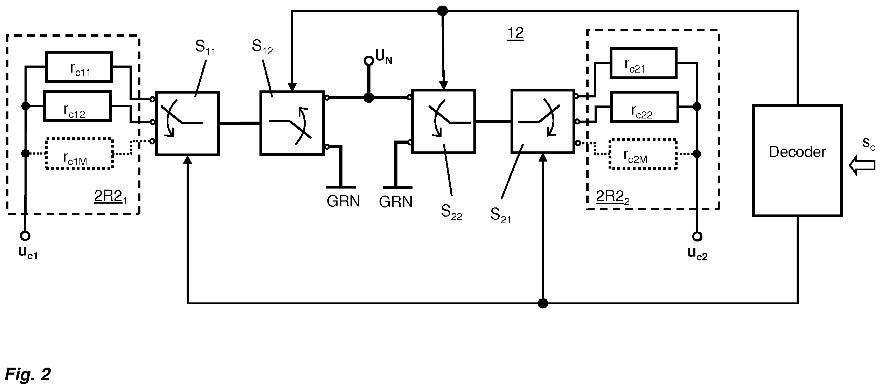

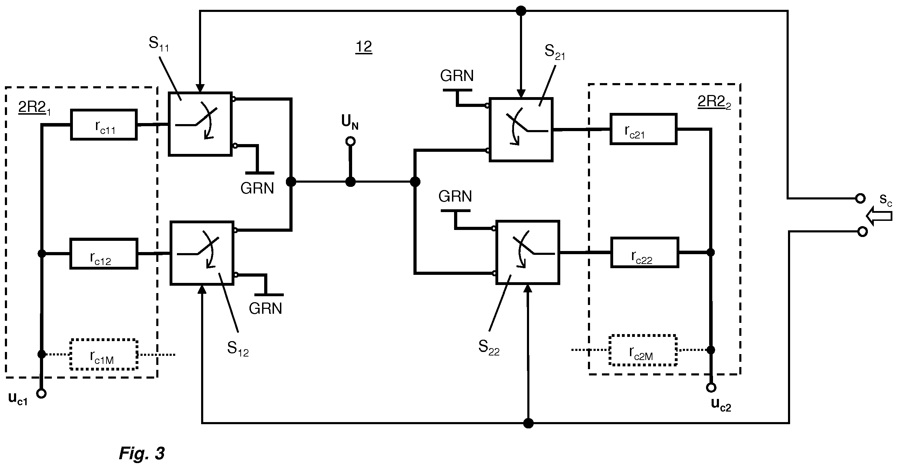

Das Einstellen der für die beiden Kompensationsspannungen $u_{c1}$, $u_{c2}$ jeweils gewünschten, nämlich dem jeweils ausgewählten Betriebsmode zugeordneten Spannungswerte $U_{c11}$, $U_{c21}$ bzw. $U_{c12}$, $U_{c22}$..., kann beispielsweise dadurch erfolgen, daß mittels einer Anzahl von Analogschaltern $S_{11}$, $S_{21}$, $S_{21}$, $S_{22}$... entsprechend bemessene - bei den in Fig. 2 bzw. 3 gezeigten Ausführungsbeispielen zu einem ersten Widerstandnetzwerk $2R2_1$ für die erste Kompensations-

spannung $u_{c1}$ bzw. einem zweiten Widerstandnetzwerk $2R2_2$ für die zweite Kompensationsspannung $u_{c2}$ zusammengefaßte - Widerstandselemente $r_{c11}$, $r_{c12}$, ... bzw. $r_{c1M}$ jeweils mit einer von zwei Elektroden wahlweise entweder auf den Spannungswert $U_N$ oder auf das Bezugspotential $\varphi_{Ref}$ gelegt werden, so daß durch wenigstens eines der Widerstandelemente jedes der beiden Widerstandsnetzwerke $2R2_1$, $2R2_2$ jeweils ein Gleichstrom fließt und im Ergebnis ausgangs des jeweiligen Widerstandsnetzwerkes $2R2_1$, $2R2_2$ jeweils eine einem jeweils dafür eingestellten Gesamtwiderstand bzw. damit eingestellten Spannungsteilern entsprechende, als Kompensationsspannung $u_{c1}$ bzw. $u_{c2}$ dienende Gleichspannung von gewünschter Spannungshöhe $U_{c11}$, $U_{c21}$, $U_{c12}$, $U_{c22}$,.. bereitgestellt ist.

Anders gesagt, werden bei dem in den Fig. 2 und 3 gezeigten Varianten für die Kompensationsschaltung 12 deren erster Betriebsmodus dadurch ausgewählt, indem der Gesamtwiderstand des Widerstandsnetzwerks $R2R_1$ mittels wenigstens des Schalters $S_{11}$ auf einen vorgegebenen ersten Widerstandswert $R_{11}$ und indem der Gesamtwiderstand des Widerstandsnetzwerks $R2R_2$ mittels wenigstens des Schalters $S_{21}$ auf einen, insb. zum Widerstandswert $R_{11}$ gleichen, vorgegebenen ersten Widerstandswert $R_{21}$ eingestellt werden, und deren zweite Betriebsmodus dadurch ausgewählt, indem der Gesamtwiderstand des Widerstandsnetzwerks $R2R_1$ mittels wenigstens des Schalters $S_{11}$ auf einen vorgegebenen, vom ersten Widerstandswert, $R_{11}$, verschiedenen zweiten Widerstandswert, $R_{12}$, und der Gesamtwiderstand des Widerstandsnetzwerks $R2R_2$ mittels wenigstens des Schalters $S_{21}$ auf einen vom Widerstandswert, $R_{21}$, verschiedenen, insb. zum Widerstandswert $R_{12}$ gleichen, zweiten Widerstandswert, $R_{22}$, eingestellt werden. Als Analogschalter können hierbei beispielsweise als integrierte Schaltkreise (IC) ausgebildete adressierbare, nämlich direkt von einem digitalen Kompensationssteuersignal $s_C$ ansteuerbare Schalterarrays, wie etwa vom Typ DG2018 von der Firma Vishay oder vom Typ ADG2128 von der Firma Analog Devices, Inc. oder aber auch diskrete Halbleiterschalter, die von einem separaten digitalen Decoder zum Umsetzen des vom Kompensationssteuersignal jeweils codiert übertragenen Signalwerts in entsprechende - nämlich den damit jeweils ausgewählten Betriebsmode der Kompensationsschaltung zugeordnete Schaltstellungen der Halbleiterschalter bewirkende - Schaltbefehle, verwendet werden.

In Fig. 2 ist eine Variante für dem Einstellen der Spannungswerte für die Kompensationsspannungen dienendes geschaltetes Widerstandsnetzwerk $2R2_1$, $2R2_2$ bzw. eine damit gebildete Kompensationsschaltung 12 schematisch dargestellt, bei der im jeweils ausgewählten Betriebsmode i (i = 1, 2...M) jeweils immer genau zwei Widerstandselemente $r_{c11}$, $r_{c22}$ oder $r_{c12}$, $r_{c22}$, bzw. $r_{c1M}$, $r_{c2M}$ - von welchen Widerstandselementen diejenigen mit dem kleinsten Zählindex, nämlich $r_{c11}$ und $r_{c21}$ von allen Widerstandselementen den kleinsten ohmschen Widerstand $R_{c11}$ bzw. $R_{c21}$ aufweisen bzw. diejenigen mit dem Zählindex i, nämlich $r_{c1i}$ und $r_{c2i}$ einen kleineren ohmschen Widerstand $R_{c1i}$ bzw. $R_{c2i}$ aufweisen als diejenigen mit dem Zählindex i+1, nämlich $r_{c1i+1}$ und $r_{c2i+1}$ - mittels eines jeweils zugehörigen Paares Analogschalter $S_{11}$, $S_{12}$ bzw. $S_{21}$, $S_{22}$,.... aktiviert sind, derart, daß mittels den beiden gegengleich gesteuerten Schaltern $S_{12}$, $S_{22}$ die den jeweils in den beiden Widerstandnetzwerken $2R2_1$, $2R2_2$ fließenden Gleichstrom treibenden Spannungen $U_N$ - $\varphi_{Ref}$ entgegengesetzt gepolt sind.

Bei Verwendung einer einer Zusammenschau von Fig. 1 und 2 entsprechenden Meßelektronik 1, nämlich mit einer mittels des oben erwähnten Mehrfach-Subtrahierers gebildeten Meß- und Steuerschaltung 13 sowie mit der vorbeschriebenen Variante der Kompensationsschaltung 12 wird unter der Maßgabe, daß die erwähnten Widerstandelemente $r_{c1i}$, $r_{c2i}$, ... $r_{m1}$, $r_{m2}$, $r_{m3}$, $r_{m4}$ der Kompensationsschaltung 12 bzw. der Meß- und Steuerschaltung 13 hinsichtlich ihrer ohmschen Widerstände gemäß Relation $R_{m3}/R_{c1i} = R_{m4}/R_{c2i}$ dimensioniert sind, durch die Kompensationsspannungen $u_{c1}$, $u_{c2}$ zudem auch die Bedingung:

$$u_{c2} - u_{c1} = \pm \left( U_N - \varphi_{Ref} \right) \cdot \cfrac{1}{\left( 1 + \cfrac{R_{c1i} + R_{c2i}}{R_{m3} + R_{m4}} \right)}$$

erfüllt, mithin ein Eintrag unerwünschter Gleichtaktkomponenten in die Spannungsdifferenz $\Delta u_{12}$ unterdrückt bzw. gänzlich vermieden. Für den durchaus anzustrebenden Fall, daß zudem alle Widerstandselemente $r_{c1i}$, $r_{c2i}$, der beiden vorgenannten Widerstandsnetzwerke $2R2_1$, $2R2_2$ jeweils paarweise gleich dimensioniert sind, derart daß hinsichtlich des ohmschen Widerstandes für die Widerstandselemente $r_{c1i}$, und $r_{c2i}$ jeweils $R_{c1i} = R_{c2i}$ gilt, ergibt sich die vorgenannte Spannungsdifferenz $u_{c2}$ - $u_{c1}$ der Kompensationsspannungen $u_{c1}$, $u_{c2}$ noch weiter vereinfacht demnach zu:

$$u_{c2} - u_{c1} = \pm \left( U_N - \varphi_{Ref} \right) \cdot \cfrac{1}{\left( 1 + \cfrac{R_{c1i}}{R_{m3}} \right)} = \pm \left( U_N - \varphi_{Ref} \right) \cdot \cfrac{R_{m3}}{R_{m3} + R_{c1i}}.$$

Bei der in der Fig. 2 zudem gezeigten Verriegelung der Schalter $S_{11}$, $S_{12}$ $S_{21}$, $S_{22}$, nämlich derart, daß die beiden die

jeweiligen Widerstandelemente $r_{c11}$, $r_{c22}$ oder $r_{c12}$, $r_{c22}$, bzw. $r_{c1M}$, $r_{c2M}$ selektierenden Schalter $S_{11}$, $S_{21}$ immer im Gleichtakt und die beiden anderen Schalter $S_{12}$, $S_{22}$, die jeweils die Polarität der dem jeweilige Widerstandnetzwerk $2R2_1$ bzw. $2R2_2$ angelegte Spannung $U_N$ - $\varphi_{Ref}$, festlegen im Gegentakt betrieben werden, entspricht eine Anzahl der für die in Fig. 2 gezeigten Kompensationsschaltung 12 sämtlicher potentiell anzusteuernden Betriebsmoden der Kompensationsschaltung somit dem Doppelten der insgesamt verwendeten M Paare an Widerstandelementen.

Bei der in Fig. 3 gezeigten Variante für die Kompensationsschaltung 12, bei der jeweils eine Elektrode jedes der in den beiden Widerstandsnetzwerken eingebundenen 2·M Widerstandselemente mittels eines jeweils zugehörigen Schalters $S_{11}$, $S_{21}$, $S_{12}$, $S_{22}$, ... entweder mit dem Bezugspotential $\varphi_{Ref}$ oder mit dem Spannungswert $U_N$ der Betriebsspannung $U_N$ beaufschlagt werden und bei der jeder der dem Widerstandsnetzwerk $2R2_1$ zugeordneten Schalter $S_{11}$, $S_{21}$ jeweils genau einen dazu komplementären, nämlich dem jeweils anderen Widerstandsnetzwerk $2R2_2$ zugeordneten und im Gegentakt betriebenen Schalter $S_{12}$ bzw. $S_{22}$, aufweist und vice versa, können hingegen mit M Paaren an Widerstandelementen bzw. Schaltern sogar jeweils $2^M$ verschiedene Spannungswerte für jede der beiden Kompensationsspannungen eingestellt, mithin bis zu $2^M$ Betriebsmoden für die Kompensationsschaltung 12 realisiert werden.

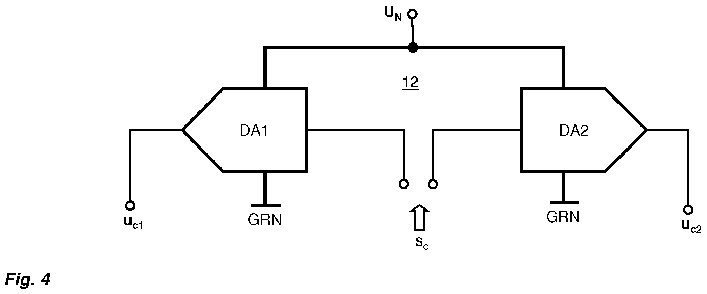

Anstelle der in den Fig. 2 und 3 gezeigten passiven Widerstandsnetzwerke $2R2_1$, $2R2_2$ können zur Bildung der Kompensationsschaltung bzw. zur Generierung der beiden Kompensationsspannungen $u_{c1}$, $u_{c2}$, wie in Fig. 4 schematisch dargestellt, aber beispielsweise auch Digital-zu-Analog-Wandler DA1, DA2 verwendet werden, die mittels des - hier digitalen - Kompensationssteuersignals $s_c$ angesteuert werden bzw. dessen digitalen Signalwerte jeweils in eine entsprechende, als Kompensationsspannung $u_{c1}$ bzw. $u_c$ dienende analoge Gleichspannung an einem jeweils als einer der Kompensationsspannungsausgänge dienenden Analogsignalausgang umsetzen. Bereits durch Verwendung herkömmlicher 8- oder 16-Bit-D/A-Wandler, beispielsweise vom Typ DAC8552 von Texas Instruments, Inc. oder auch vom Typ DAC161P997 ("single wire"-$\Sigma\Delta$-Wandler) von Texas Instruments, Inc., wird so auf sehr einfache Weise ein sehr feinstufiges, mithin sehr genaues Einstellen der beiden Kompensationsspannungen $u_{c1}$, $u_{c2}$ ermöglicht.

Zwecks der Selektion des jeweils für die aktuelle Störkomponente am besten geeigneten Betriebsmodus der Kompensationsschaltung weist letztere ferner einen mit einem komplementären Kompensationssteuerausgang der Meß- und Steuerschaltung verbundenen Steuersignaleingang auf. Die Meß- und Steuerschaltung 13 ist im Gegenzug wiederum dafür eingerichtet, am Kompensationssteuerausgang ein Kompensationssteuersignal $s_C$ zum Auswählen eines der auswählbaren Betriebsmodi der Kompensationsschaltung 12 bereitzustellen, und zwar derart, daß das Kompensationssteuersignal $s_C$ zum Auswählen des ersten Betriebsmodes der Kompensationsschaltung einen nämlichem ersten Betriebsmode der Kompensationsschaltung 12 entsprechenden ersten Signalwert aufweist, bzw. daß das Kompensationssteuersignal zum Auswählen des zweiten Betriebsmodes der Kompensationsschaltung einen nämlichem zweiten Betriebsmode der Kompensationsschaltung entsprechenden, vom ersten Signalwert verschiedenen zweiten Signalwert aufweist. Das Kompensationssignal $s_C$ ist nach einer weiteren Ausgestaltung der Erfindung als ein die verschiedenen Signalwerte für sämtliche potentiell anzusteuernden Betriebsmoden M der Kompensationsschaltung, mit M $\geq$ 2, binär codierendes Digitalsignal ausgebildet. Das Kompensationssteuersignal $s_C$ kann hierfür beispielsweise als ein die den jeweiligen anzusteuernden Betriebsmode codierende Bits parallele übertragendes, mithin eine die insgesamt zu codierenden Signalwerten entsprechende Wortbreite in Bit von mehr als $\log_2(M)$ aufweisendes Digitalsignal oder beispielsweise auch als ein die den jeweiligen anzusteuernden Betriebsmode codierende Bits seriell übertragendes 1-Bit Digitalsignal ausgebildet sein. Demensprechend kann der Steuersignaleingang der Kompensationsschaltung 12 - je nach konkreter Ausgestaltung des Kompensationssteuersignals - als eine parallele bzw. serielle digitale Schnittstelle ausgestaltet sein, beispielsweise also inform einer konventionellen "Bitstream"-, "I2C"-, "Parallel CMOS"-, "Parallel LVDS"-, "Serial I2C"-, "Serial LVDS"-, "Serial SPI"-, "Single-Wire"-, oder "SPI"-Schnittstelle.

Gemäß einer weiteren Ausgestaltung sind die Kompensationsschaltung und die Meß- und Steuerschaltung dafür eingerichtet, im Zusammenspiel die eingangs der Meßschaltung vorliegende Spannungsdifferenz $\Delta u_{12}$ kleiner als einen dafür vorgegebenen, beispielsweise weniger als +5 V betragenden, Maximalwert, $U_{12Max}$, bzw. größer als einen dafür vorgegebener, beispielsweise mehr als -5 V betragenden, Minimalwert, $U_{12Min}$, einzustellen; dies im besonderen in der Weise, daß nämliche Spannungsdifferenz $\Delta u_{12}$ innerhalb des erwähnten Umsetzbereichs, $\Delta U_{12} = U_{12Max} - U_{12Min}$ zu halten. Der Maximalwert, $U_{12Max}$, entspricht hierbei einer oberen Intervallgrenze des Umsetzbereichs, $\Delta U_{12}$, bzw. legt diese fest, während der Minimalwert, $U_{12Min}$, einer unteren Intervallgrenze des Umsetzbereichs, $\Delta U_{12}$, entspricht bzw. diese festlegt. Im Ergebnis entspricht der Umsetzbereich, $\Delta U_{12}$, einer Differenz, $U_{12Max} - U_{12Min}$, zwischen nämlichem Maximalwert, $U_{12Max}$, und nämlichem Minimalwert, $U_{12Min}$, bzw. wird dadurch festgelegt, indem die Kompensationsschaltung 12 und die Meß- und Steuerschaltung 13 im Zusammenspiel die Spannungsdifferenz $\Delta u_{12}$ innerhalb des vorgegebenen Umsetzbereichs, $\Delta U_{12}$, halten.

Nicht zuletzt zum erwähnten Halten der Spannungsdifferenz $\Delta u_{12}$ innerhalb des Umsetzbereichs $\Delta U_{12}$ der Meß- und Steuerschaltung ist diese nach einer weiteren Ausgestaltung dafür eingerichtet, das Kompensationssteuersignal auf den den ersten Betriebsmode der Kompensationsschaltung entsprechenden ersten Signalwert zu setzen und hernach wenigstens einen Digitalwert, $U_{DI}$, erster Art, nämlich einen Digitalwert des digitalen Spannungsmeßsignals $u_D$, der während der erste Betriebsmode der Kompensationsschaltung ausgewählt ist, generiert worden ist, mit wenigstens einem vorgegebenen ersten Referenzwert, $U_{r1}$, zu vergleichen. Nämlicher Referenzwert, $U_{r1}$, kann beispielsweise einem

vorgegebenen Minimalwert, $U_{12Min}$, für einen Meßwert, $U_{12}$, der Spannungsdifferenz $\Delta u_{12}$ entsprechenden, welchen Minimlawert die Spannungsdifferenz $\Delta u_{12}$ erfahrungsgemäß mindestens aufweisen soll, um den ersten Betriebsmode der Kompensationsschaltung für einen gewissen Zeitraum, beispielsweise von länger als 1 s, eingestellt lassen zu können. Der Minimalwert kann beispielsweise 25% des Umsetzbereichs $\Delta U_{12}$ entsprechen, mithin kann der Referenzwert, $U_{r1}$, beispielsweise auf etwa 25% des Umsetzbereichs $\Delta U_{12}$ eingestellt sein. Nach einer Weiterbildung der Erfindung ist die Meß- und Steuerschaltung ferner dafür eingerichtet, auch ein Unterschreiten des ersten Referenzwerts, $U_{r1}$, durch nämlichen Digitalwert, $U_{DI}$, erster Art detektieren zu können und ggf. hernach - nicht zuletzt auch zum Erhöhen der Spannungsdifferenz $\Delta u_{12}$, auf einen Meßwert, $U_{12}$, der größer als der dafür vorgegebener Minimalwert, $U_{12Min}$, ist beispielsweise also zwischen 20% und 80% des Umsetzbereichs $\Delta U_{12}$ , idealerweise bei etwa 50% des Umsetzbereichs $\Delta U_{12}$ liegt - das Kompensationssteuersignal auf den den zweiten Betriebsmode der Kompensationsschaltung entsprechenden zweiten Signalwert zu setzen, mithin ein Wechsel vom ersten in den zweiten Betriebsmode der Kompensationsschaltung zu veranlassen. Nach einer weiteren Ausgestaltung der Erfindung ist die Meß- und Steuerschaltung ferner auch dafür eingerichtet, wenigstens einen Digitalwert, $U_{DII}$, zweiter Art, nämlich einen Digitalwert des digitalen Spannungsmeßsignals $u_D$, der während der zweite Betriebsmode der Kompensationsschaltung ausgewählt ist generiert worden ist, mit einem vorgegebenen zweiten Referenzwert, $U_{r2}$, zu vergleichen. Der zweite Referenzwert, $U_{r2}$, kann - analog zum ersten Referenzwert, $U_{r1}$ - einem vorgegebenen Maximalwert, $U_{12Max}$, für einen Meßwert, $U_{12}$, der Spannungsdifferenz $\Delta u_{12}$ entsprechenden, welchen Maximalwert die Spannungsdifferenz $\Delta u_{12}$ erfahrungsgemäß mindestens aufweisen soll, um den zweiten Betriebsmode der Kompensationsschaltung für einen gewissen Zeitraum, beispielsweise von länger als 1 s, eingestellt lassen zu können. Dafür kann nämlicher Referenzwert, $U_{r2}$, beispielsweise auf etwa 75% des Umsetzbereichs $\Delta U_{12}$ eingestellt sein. Nach einer anderen Weiterbildung der Erfindung ist die Meß- und Steuerschaltung ferner dafür eingerichtet, ein Überschreiten des zweiten Referenzwerts, $U_{r2}$, durch nämlichen Digitalwert, $U_{DII}$, zweiter Art detektieren zu können und ggf. hernach - nicht zuletzt auch zum Verringern der Spannungsdifferenz $\Delta u_{12}$, auf einen Meßwert, $U_{12}$, der kleiner als der dafür vorgegebener Maximalwert, $U_{12Max}$, ist - das Kompensationssteuersignal auf den den ersten Betriebsmode der Kompensationsschaltung entsprechenden ersten Signalwert zu setzen. Falls erforderlich, beispielsweise um ein Halten der Spannungsdifferenz $\Delta u_{12}$ möglichst exakt bei etwa 50% des Umsetzbereichs $\Delta U_{12}$ auch bei relativ großen bzw. schnell ablaufenden Schwankungen in der Störkomponente zu ermöglichen, kann die Kompensationsschaltung 12 selbstverständlich auch noch weitere Betriebsmoden der vorgenannten Art aufweisen, in denen die Kompensationsschaltung die Kompensationsspannungen $u_{c1}$, $u_{c2}$ noch auf andere geeignete Spannungswerte als die vorgenannten Spannungswerte, $U_{c11}$, und $U_{c21}$, bzw. $U_{c12}$, und $U_{c22}$, gezielt einstellen kann, so daß also im Zusammenspiel mit der Meß- und Steuerschaltung die Spannungsdifferenz $\Delta u_{12}$ im Vergleich zu einer Variante mit lediglich zwei Betriebsmoden feiner gestuft verändert werden kann.

Die Meß- und Steuerschaltung ist gemäß einer weiteren Ausgestaltung dafür eingerichtet, mittels des digitalen Spannungsmeßsignals $u_D$ eine Spannungsdifferenzenfolge $\Delta u_D$, nämliche eine Folge von Digitalwerten, $\Delta U_D$, von denen jeder eine Differenz zwischen jeweils zwei zeitlich aufeinanderfolgenden Digitalwerten des digitalen Spannungsmeßsignals $u_D$ repräsentiert, zu generieren. Nicht zuletzt für den bereits erwähnten Fall, daß die Meßelektronik dafür vorgesehen ist, eine physikalische Meßgröße einer - ggf. auch strömenden - Flüssigkeit zu erfassen, ist die Meß- und Steuerschaltung ferner so ausgebildet, daß sie dann keine Digitalwerte, $\Delta U_D$, generiert oder aber auch im nachhinein wieder verwirft, wenn dadurch ein Differenz zwischen solchen Digitalwerten, $U_D$, des digitalen Spannungsmeßsignals $u_D$ repräsentiert würde, die während unterschiedlicher Betriebsmoden der Kompensationsschaltung generiert worden sind. Für das voranstehend beschriebene Beispiel, daß zeitlich aufeinanderfolgend zunächst Digitalwerte, $U_{DI}$, erster Art und anschließend Digitalwert, $U_{DII}$, zweiter Art generiert werden, bedeutet dies also, daß nämliche Digitalwerte, $\Delta U_D$, anhand eines Digitalwerts, $U_{DI}$, erster Art und eines Digitalwerts, $U_{DII}$, zweiter Art, etwa in der Weise $\Delta U_D = U_{DII} - U_{DI}$, nicht generiert werden sollen. Hierdurch geht nämlich - unter der Maßgabe, daß die für die Kompensationsspannungen $u_{c1}$, $u_{c2}$, während eines bestimmten Betriebsmodes jeweils eingestellten Spannungswerte konstant gehalten sind - die jeweilige Kompensationsspannung $u_{c1}$, $u_{c2}$ nicht in die Differenz bzw. die entsprechenden Digitalwerte, $U_D$ ein, mithin ist eine genaue Kenntnis der tatsächlichen eingestellten Spannungswerte $U_{c11}$, $U_{c21}$, $U_{c12}$, $U_{c22}$,.. für die Kompensationsspannungen nicht erforderlich.

Die Meßelektronik ist im gezeigten Ausführungsbeispiel als eine Teilkomponente eines, beispielsweise als magnetisch-induktiven Durchflußmeßgerät (MID) ausgestalteten, Meßsystems zum Ermitteln einer Volumendurchflußrate und/oder einer Strömungsgeschwindigkeit einer strömenden Flüssigkeit, basierend auf einer dementsprechend von nämlicher Volumendurchflußrate bzw. Strömungsgeschwindigkeit abhängigen Nutzkomponente $\Delta\varphi_N$, ausgebildet. Nach einer weiteren Ausgestaltung der Erfindung ist die Meß- und Steuerschaltung hierbei zudem dafür eingerichtet ist, mittels des digitalen Spannungsmeßsignals $u_D$ eine Folge von mit einer Aktualisierungsrate $f_{sys}$ = $1/T_{sys}$ getakteten, die Volumendurchflußrate jeweils momentan, nämlich für die Dauer $T_{sys}$ eines Meßzyklusses, repräsentierenden Durchfluß-Meßwerten $X_v$ zu generieren, beispielsweise auch basierend auf der vorangehend erwähnten Spannungsdifferenzenfolge $\Delta u_D$. Für den erwähnte Fall, daß die Spannungsdifferenzenfolge $\Delta u_D$ auch solche Digitalwerte, $\Delta U_D$, enthalten kann oder enthält, die jeweils eine Differenz zwischen während unterschiedlicher Betriebsmoden der Kompensationsschaltung generierten Digitalwerten, $U_D$, des digitalen Spannungsmeßsignals $u_D$ repräsentieren, ist die Meß- und Steuerschaltung ferner so eingerichtet, derartige Digitalwerte, $\Delta U_D$ nicht bei der Ermittlung eines Durchfluß-Meßwerts zu verwenden bzw. zu ignorieren.

Zum Führen der - zumindest zeitweise strömenden - Flüssigkeit umfaßt das Meßsystem zusätzlich zur Meßelektronik 1 weiters ein Meßrohr 2, an dem die beiden Meßelektroden voneinander beabstandet angeordnet sind. Die Meßelektroden sind hierbei im besonderen dafür eingerichtet, daß deren jeweiliges elektrisches Potential jeweils von einer in einer im Meßrohr geführten Flüssigkeit auftretenden, beispielsweise durch Ladungsträgerverschiebung innerhalb der Flüssigkeit bewirkten, elektrischen Spannung abhängig ist. Wie in Fig. 1 schematisch dargestellt, sind die Meßelektroden hierfür ferner so angeordnet, daß sie entlang einer gedachten, eine Querschnittsfläche des Meßrohrs umspannende - hier kreisförmigen - Umfangslinie des Meßrohrs voneinander beabstandet sind. Wie bei solchen Meßsystemen üblich, können die beiden Meßelektroden hierbei als galvanische, nämlich jeweils mit einer Elektrodenspitze aus elektrisch leitfähigem Material, wie z.B. einem Metall, in ein Lumen des Meßrohrs ragende, mithin von während des Betriebs im Meßrohr geführter Flüssigkeit kontaktierbare Meßelektroden ausgebildet sein; die Meßelektroden können aber beispielsweise auch kapazitive Meßelektroden sein.

Das Meßsystem ist nach einer weiteren Ausgestaltung der Erfindung als ein magnetisch-induktives Durchflußmeßgerät (MID) ausgestaltet und weist daher ferner einen Magnetfeldgenerator 3 zum Erzeugen eines ein Lumen des Meßrohrs 2, nicht zuletzt auch innerhalb eines sich zwischen den Meßelektroden erstreckenden Bereichs, zumindest teilweise durchsetzenden Magnetfeld B, das sich zudem in Abhängigkeit von einem an einem Steuersignaleingang nämlichen Magnetfeldgenerators anlegbaren Magnetfeldsteuersignal ändert. Das Magnetfeld B ist - wie beispielsweise bei konventionellen MID üblich - vorzugsweise so ausgebildet, daß es eine senkrecht zu einer die beiden Meßelektroden imaginär verbindenden gedachten Verbindungsachse verlaufende, nicht zuletzt auch die Nutzkomponente der Potentialdifferenz beeinflussende Nutzkomponente $B_N$ mit einer mit einer Taktrate, $f_M = 1/T_M$, periodisch ändernden Magnetfeldrichtung aufweist. Im Ergebnis dessen ist auch die Nutzkomponente $\Delta\varphi_N$ der Potentialdifferenz $\Delta\varphi_{12}$ - selbst bei gleichbleibender Strömungsgeschwindigkeit bzw. konstanter Volumendurchflußrate - im vorgegebenen Takt, $T_M$, zeitlich veränderlich. Der Magnetfeldgenerator kann, wie bei solchen Meßsystemen durchaus üblich, beispielsweise mittels einer in eine H-Schaltung integrierten Spulenanordnung gebildet sein.

Zur Ansteuerung des Magnetfeldgenerators, einschließlich dessen Versorgung mit elektrischer Energie, weist die Meß- und Steuerschaltung 13 einen mit dem Steuersignaleingang des Magnetfeldgenerators 3 verbundenen Magnetfeldsteuersignalausgang auf und ist die die Meß- und Steuerschaltung dafür eingerichtet, am Magnetfeldsteuersignalausgang ein, beispielsweise periodisch getaktetes, Magnetfeldsteuersignal $s_B$ bereitzustellen. Das Magnetfeldsteuersignal dient dazu, eine taktweise bzw. periodische Änderung des vom Magnetfeldgenerator erzeugten Magnetfelds zu bewirken. Dies im besonderen derart, daß die Nutzkomponente der Nutzkomponente $B_N$ des Magnetfeldes B eine mit der Taktrate $f_M = 1/T_M$ periodisch ändernden Magnetfeldrichtung aufweist. Dafür kann das Magnetfeldsteuersignal $s_B$ beispielsweise als ein einen Arbeitstakt $T_M$ für den Magnetfeldgenerator lieferndes Rechtecksignal mit einem fest eingestellten oder im Betrieb veränderbaren Puls-zu-Pausen-Verhältnis bzw. mit entsprechend fest eingestellter oder im Betrieb veränderbarer Taktrate $f_M = 1/T_M$ ausgebildet sein. Dementsprechend ist die Meß- und Steuerschaltung nach einer weiteren Ausgestaltung der Erfindung dafür eingerichtet, das Magnetfeldsteuersignal als ein mit der Taktrate, $f_M = 1/T_M$, periodisch getaktetes Rechtecksignal auszugeben.

**Patentansprüche**

1.  Meßelektronik (1) zum Ermitteln einer, insb. von einer Volumendurchflußrate einer einem Magnetfeld ausgesetzten strömenden Flüssigkeit abhängigen, Potentialdifferenz ($\Delta\varphi_{12}$) zwischen einer ein erstes elektrisches Potential ($\varphi_1$) aufweisenden ersten Meßelektrode und einer ein zweites elektrisches Potential ($\varphi_2$) aufweisenden zweiten Meßelektrode,

    - wobei nämliche Potentialdifferenz ($\Delta\varphi_{12}$) eine - insb. mit einem vorgegebenen Takt, $T_M$ - zeitlich veränderliche Nutzkomponente ($\Delta\varphi_N$) enthält,

        -- die kleiner als ein dafür vorgegebener maximaler Spannungswert, $\Delta\varphi_{NMAX}$, und
        -- die größer als ein dafür vorgegebener minimaler Spannungswert, $\Delta\varphi_{NMIN}$, ist, und

    - wobei nämliche Potentialdifferenz ($\Delta\varphi_{12}$) eine zeitlich konstante bzw. sich im Vergleich zur Nutzkomponente
    - insb. im Vergleich zu einer Taktrate, $f_M = 1/T_M$, mit der sich die Nutzkomponente

    zeitlich ändert - langsamer ändernde Störkomponente ($\Delta\varphi_S$) enthält,

        -- die kleiner als ein dafür vorgegebener maximaler Spannungswert, $\Delta\varphi_{SMAX}$, der größer als der vorgegebene

maximale Spannungswert, $\Delta\varphi_{NMAX}$, der Nutzkomponente ($\Delta\varphi_N$) ist, und
-- die größer als ein dafür vorgegebener minimaler Spannungswert, $\Delta\varphi_{SMIN}$, der kleiner als der vorgegebene minimale Spannungswert, $\Delta\varphi_{NMIN}$, der Nutzkomponente ($\Delta\varphi_N$) ist, ist,

welche Meßelektronik umfaßt:

- eine ein, insb. festes, Bezugspotential ($\varphi_{Ref}$) aufweisende Referenzelektrode (GRN);
- eine Eingangsschaltung

    -- mit einem mittels eines nicht-invertierenden Eingangs eines ersten Impedanzwandlers ($OV_1$) gebildeten, mit der ersten Meßelektrode elektrisch verbindbaren ersten Schaltungseingang,
    -- mit einem mittels eines nicht-invertierenden Eingangs eines zweiten Impedanzwandlers ($OV_2$) gebildeten, mit der zweiten Meßelektrode elektrisch verbindbaren zweiten Schaltungseingang,
    -- mit einem mittels eines Ausgangs des ersten Impedanzwandlers gebildeten ersten Signalspannungsausgang,
    -- und mit einem mittels eines Ausgangs des zweiten Impedanzwandlers gebildeten zweiten Signalspannungsausgang
    -- wobei die Eingangsschaltung dafür eingerichtet ist,

        --- am ersten Signalspannungsausgang eine auf das Bezugspotential ($\varphi_{Ref}$) bezogene, vom ersten elektrischen Potential ($\varphi_1$) abhängige erste Signalspannung ($u_{s1}$) und
        --- am zweitem Signalspannungsausgang eine auf das Bezugspotential bezogene, zumindest vom zweiten elektrischen Potential ($\varphi_2$) abhängige zweite Signalspannung ($u_{s2}$) bereitzustellen, insb. derart, daß eine zwischen der ersten Signalspannung und der zweiten Signalspannung existierende Spannungsdifferenz einem vorgegebenen Vielfachen, $V_1$, der Potentialdifferenz ($\Delta\varphi_{12}$) und/oder weniger als einem 5-fachen der Potentialdifferenz ($\Delta\varphi_{12}$) entspricht;

- eine Kompensationsschaltung (12)

    -- mit einem ersten Kompensationsspannungsausgang,
    -- mit einem zweiten Kompensationsspannungsausgang,
    -- und mit einem Steuersignaleingang,
    -- wobei die Kompensationsschaltung dafür eingerichtet ist, am ersten Kompensationsspannungsausgang eine erste Kompensationsspannung ($u_{c1}$), nämlich eine auf das Bezugspotential bezogene einstellbare erste Gleichspannung, und am zweiten Kompensationsspannungsausgang eine zweite Kompensationsspannung ($u_{c2}$), nämlich eine auf das Bezugspotential bezogene, insb. einstellbare oder fest eingestellte, zweite Gleichspannung, bereitzustellen, insb. derart, daß eine zwischen der ersten Kompensationsspannung und der zweiten Kompensationsspannung existierende Spannungsdifferenz mehr als 25% eines momentanen Spannungswerts der Störkomponente entspricht, und
    -- wobei die Kompensationsschaltung wenigstens zwei mittels eines am Steuersignaleingang anlegbaren Kompensationssteuersignals auswählbare Betriebsmodi aufweist und dafür eingerichtet ist,

        --- in einem ersten Betriebsmodus die erste Kompensationsspannung ($u_{c1}$) auf einen dafür vorgegebenen ersten Spannungswert, $U_{c11}$, und
        --- in einem zweiten Betriebsmodus die erste Kompensationsspannung ($u_{c1}$) auf einen dafür vorgegebenen zweiten Spannungswert, $U_{c12}$, der größer als der für die erste Kompensationsspannung ($u_{c1}$) vorgegebene erste Spannungswert, $U_{c11}$, ist, einzustellen;

- sowie eine Meß- und Steuerschaltung (13)

    -- mit einem mit dem ersten Signalspannungsausgang der Eingangsschaltung verbundenen ersten Signalspannungseingang,
    -- mit einem mit dem zweiten Signalspannungsausgang der Eingangsschaltung elektrisch verbundenen zweiten Signalspannungseingang,
    -- mit einem mit dem ersten Kompensationsspannungsausgang der Kompensationsschaltung elektrisch verbundenen dritten Signalspannungseingang,
    -- mit einem mit dem zweiten Kompensationsspannungsausgang der Kompensationsschaltung elektrisch verbundenen vierten Signalspannungseingang,

-- und mit einem mit dem Steuersignaleingang der Kompensationsschaltung verbundenen Kompensationssteuerausgang,

-- wobei die Meß- und Steuerschaltung dafür eingerichtet ist, eine zwischen einer von sowohl der ersten Signalspannung ($u_{s1}$) als auch der ersten Kompensationsspannung ($u_{c1}$) abhängigen ersten kompensierten Signalspannung ($u_{sc1}$), und einer von sowohl der zweiten Signalspannung ($u_{s2}$) als auch der zweiten Kompensationsspannung ($u_{c2}$) abhängigen zweiten kompensierten Signalspannung ($u_{sc2}$) existierende Spannungsdifferenz ($\Delta u_{12}$) mit einer vorgebbaren - insb. im Vergleich zur Taktrate, $f_M = 1/T_M$, höheren - Abtastrate, $f_A$, und mit einer, insb. mehr als 16 Bit betragenden, digitalen Auflösung, N, in ein nämliche Spannungsdifferenz ($\Delta u_{12}$) repräsentierendes digitales Spannungsmeßsignal ($u_D$), nämlich eine Folge von aus einem vorgegebenen gestuften Wertevorrat ausgewählten Digitalwerten, $U_D$, von denen jeder einen innerhalb eines vorgegebenen Umsetzbereichs, $\Delta U_{12}$, liegenden quantisierten Meßwert, $U_{12}$, der Spannungsdifferenz ($\Delta u_{12}$) repräsentiert, umzusetzen, und

- wobei die Meß- und Steuerschaltung dafür eingerichtet ist, am Kompensationssteuerausgang ein Kompensationssteuersignal zum Auswählen eines der auswählbaren Betriebsmodi der Kompensationsschaltung bereitzustellen, derart,

-- daß das Kompensationssteuersignal zum Auswählen des ersten Betriebsmodes der Kompensationsschaltung einen nämlichem ersten Betriebsmode der Kompensationsschaltung entsprechenden ersten Signalwert aufweist, bzw.

-- daß das Kompensationssteuersignal zum Auswählen des zweiten Betriebsmodes der Kompensationsschaltung einen nämlichem zweiten Betriebsmode der Kompensationsschaltung entsprechenden, vom ersten Signalwert verschiedenen zweiten Signalwert aufweist.

2. Meßelektronik nach einem der vorherigen Ansprüche, wobei die Meß- und Steuerschaltung dafür eingerichtet ist,

- das Kompensationssteuersignal auf den den ersten Betriebsmode der Kompensationsschaltung entsprechenden ersten Signalwert zu setzen
- und hernach wenigstens einen Digitalwert, $U_{DI}$, erster Art, nämlich einen während der erste Betriebsmode der Kompensationsschaltung ausgewählt ist generierten Digitalwert des digitalen Spannungsmeßsignals ($u_D$), mit wenigstens einem, insb. einem vorgegebenen Minimalwert, $U_{12Min}$, für einen Meßwert, $U_{12}$, der Spannungsdifferenz ($\Delta u_{12}$) entsprechenden, vorgegebenen ersten Referenzwert, $U_{r1}$, zu vergleichen.

3. Meßelektronik nach dem vorherigen Anspruch, wobei die Meß- und Steuerschaltung dafür eingerichtet ist,

- ein Unterschreiten des ersten Referenzwerts, $U_{r1}$, durch nämlichen Digitalwert, $U_{DI}$, erster Art zu detektieren
- und hernach zum Erhöhen der Spannungsdifferenz ($\Delta u_{12}$), insb. auf einen Meßwert, $U_{12}$, der größer als ein dafür vorgegebener Minimalwert, $U_{12Min}$, ist, das Kompensationssteuersignal auf den den zweiten Betriebsmode der Kompensationsschaltung entsprechenden zweiten Signalwert zu setzen.

4. Meßelektronik nach dem vorherigen Anspruch, wobei die Meß- und Steuerschaltung dafür eingerichtet ist, wenigstens einen Digitalwert, $U_{DII}$, zweiter Art, nämlich einen während der zweite Betriebsmode der Kompensationsschaltung ausgewählt ist generierten Digitalwert des digitalen Spannungsmeßsignals ($u_D$), mit einem, insb. einem vorgegebenen Maximalwert, $U_{12Max}$, für einen Meßwert, $U_{12}$, der Spannungsdifferenz ($\Delta u_{12}$) entsprechenden, vorgegebenen zweiten Referenzwert, $U_{r2}$, zu vergleichen, insb. derart, daß die Meß- und Steuerschaltung dafür eingerichtet ist, ein Überschreiten des zweiten Referenzwerts durch nämlichen Digitalwert, $U_{DII}$, zweiter Art zu detektieren, und hernach zum Verringern der Spannungsdifferenz ($\Delta u_{12}$), insb. auf einen Meßwert, $U_{12}$, der kleiner als ein dafür vorgegebener Maximalwert, $U_{12Max}$, ist, das Kompensationssteuersignal auf den den ersten Betriebsmode der Kompensationsschaltung entsprechenden ersten Signalwert zu setzen.

5. Meßelektronik nach einem der vorherigen Ansprüche, wobei die Kompensationsschaltung und die Meß- und Steuerschaltung dafür eingerichtet sind, die Spannungsdifferenz ($\Delta u_{12}$) kleiner als einen dafür vorgegebener, insb. weniger als +5 V betragenden, Maximalwert, $U_{12Max}$, und/oder größer als einen dafür vorgegebener, insb. mehr als -5 V betragenden, Minimalwert, $U_{12Min}$, einzustellen, insb. die Spannungsdifferenz ($\Delta u_{12}$) innerhalb des vorgegebenen Umsetzbereichs, $\Delta U_{12} = U_{12Max} - U_{12Min}$, zu halten.

6. Meßelektronik nach dem vorherigen Anspruch,

- wobei nämlicher Maximalwert, $U_{12Max}$, einer oberen Intervallgrenze des Umsetzbereichs, $\Delta U_{12}$, und nämlicher Minimalwert, $U_{12Min}$, einer unteren Intervallgrenze des Umsetzbereichs, $\Delta U_{12}$, entsprechen; und/oder

- wobei der Umsetzbereich, $\Delta U_{12}$, einer Differenz, $U_{12Max} - U_{12Min}$, zwischen nämlichem Maximalwert, $U_{12Max}$, und nämlichem Minimalwert, $U_{12Min}$, entspricht.

7. Meßelektronik nach einem der vorherigen Ansprüche, wobei die Meß- und Steuerschaltung dafür eingerichtet ist, eine die Spannungsdifferenz ($\Delta u_{12}$) repräsentierende Meßspannung ($u_M$) zu erzeugen, insb. nämlich die Meßspannung ($u_D$) als ein Vielfaches, $V_2$, der Spannungsdifferenz ($\Delta u_{12}$) der Spannungsdifferenz ($\Delta u_{12}$) auszugeben und/oder derart zu erzeugen, daß die Meßspannung ($U_M$) kleiner als ein dafür vorgegebener, insb. weniger als +5 V betragender, maximaler Spannungswert, $U_{MMax}$, und/oder größer als ein dafür vorgegebener, insb. mehr als -5V betragender, minimaler Spannungswert, $U_{MMin}$, ist, und/oder daß die Meßspannung ($U_M$) innerhalb eines vorgegebenen Meßspannungsbereichs, $\Delta U_m = U_{MMax} - U_{MMin}$, der kleiner als 5V ist, liegt.

8. Meßelektronik nach Anspruch 7, wobei die Meß- und Steuerschaltung einen, insb. mittels eines gegengekoppelten Differenzverstärkers gebildeten, Subtrahier mit einem invertierenden Signaleingang, mit einem nicht-invertierenden Signaleingangs und mit einem Meßspannungsausgang aufweist.

9. Meßelektronik nach Anspruch 8,

   - wobei der erste und dritte Signalspannungseingang der Meß- und Steuerschaltung mittels des nicht-invertierenden Signaleingangs des Subtrahierers und der zweite und vierte Signalspannungseingang der Meß- und Steuerschaltung mittels des invertierenden Signaleingangs des Subtrahierers gebildet sind; und/oder
   - wobei der Subtrahierer dafür eingerichtet ist, die Meßspannung ($u_m$) am Meßspannungsausgang bereitzustellen.

10. Meßelektronik nach einem der vorherigen Ansprüche, wobei die Meß- und Steuerschaltung einen mit der Abtastrate, $f_A$, getakteten, insb. eine nominelle Auflösung von mehr als 16 Bit aufweisenden, Analog-zu-Digital-Wandler (A/D) mit einem Analogsignaleingang und mit einem Digitalsignalausgang aufweist.

11. Meßelektronik nach Anspruch 8 und 10,

    - wobei der Analogsignaleingang des Analog-zu-Digital-Wandlers (A/D) mit dem Meßspannungsausgang des Subtrahierers elektrisch verbunden ist, und
    - -wobei der Analog-zu-Digital-Wandler (A/D) dafür eingerichtet ist, das digitale Spannungsmeßsignal ($u_D$) am Digitalsignalausgang bereitzustellen.

12. Meßelektronik nach einem der vorherigen Ansprüche,

    - wobei die Kompensationsschaltung dafür eingerichtet ist, im ersten Betriebsmodus die zweite Kompensationsspannung auf einen dafür vorgegebenen ersten Spannungswert, $U_{c21}$, einzustellen, der größer als der erste Spannungswert, $U_{c11}$, der ersten Kompensationsspannung ($u_{c1}$) ist; und/oder
    - wobei die Kompensationsschaltung dafür eingerichtet ist, im zweiten Betriebsmodus die zweite Kompensationsspannung auf einen dafür vorgegebenen zweiten Spannungswert, $U_{c22}$, einzustellen, der kleiner als der zweite Spannungswert, $U_{c12}$, der ersten Kompensationsspannung ($u_{c1}$), ist.

13. Meßelektronik nach dem vorherigen Anspruch, wobei die Kompensationsschaltung dafür eingerichtet ist, im ersten Betriebsmodus die zweite Kompensationsspannung ($u_{c2}$) auf den Spannungswert, $U_{c21}$, und im zweiten Betriebsmodus die zweite Kompensationsspannung ($u_{c2}$) auf den Spannungswert, $U_{c22}$, einzustellen, derart, daß eine Kompensationsspannungsdifferenz ($\Delta u_{c12}$), nämlich eine zwischen der ersten Kompensationsspannung ($u_{c1}$) und der zweiten Kompensationsspannung ($u_{c2}$) eingestellte Spannungsdifferenz, im ersten Betriebsmode einen Spannungswert, $U_{c11} - U_{c21}$, annimmt, der verschieden ist von einem Spannungswert, $U_{c12} - U_{c22}$, den die Kompensationsspannungsdifferenz ($\Delta u_{c12}$) im zweiten Betriebsmode annimmt, insb. derart, daß nämlicher Spannungswert, $U_{c12} - U_{c22}$, größer als der Spannungswert, $U_{c11} - U_{c21}$, ist.

14. Meßelektronik nach einem der vorherigen Ansprüche, wobei die Kompensationsschaltung wenigstens einen - ersten - Digital-zu-Analog-Wandler (DA1; DA2) mit einem, insb. das Steuersignal der Meß- und Steuerschaltung empfangenden und/oder den Steuersignaleingang der Kompensationsschaltung bildenden, Digitalsignaleingang und mit einem, insb. die erste Kompensationsspannung liefernden und/oder den ersten Kompensationsspannungsausgang bildenden, Analogsignalausgang aufweist.

**15.** Meßelektronik nach Anspruch 14,

- wobei der erste Kompensationsspannungsausgang der Kompensationsschaltung mittels des Analogsignalausgangs des wenigstens einen Digital-zu-Analog-Wandlers (DA1; DA2) gebildet ist, insb. indem der Analogsignalausgang des Digital-zu-Analog-Wandlers (DA1; DA2) mit dem ersten Signalspannungsausgang der Eingangsschaltung unter Zwischenschaltung wenigstens eines Wirderstandselements ($r_{m3}$; $r_{m4}$) elektrisch verbunden ist; und/oder

--wobei der Digital-zu-Analog-Wandler (DA1; DA2) dafür eingerichtet ist, die erste Kompensationsspannung ($u_{c1}$) einzustellen, insb. indem eine an dessen Analogsignalausgang eingestellte Gleichspannung einen Kompensationsstrom durch wenigstens ein mit dem Analogsignalausgang elektrisch verbundenes Widerstandselement treibt; und/oder

- wobei der Steuersignaleingang der Kompensationsschaltung mittels des Digitalsignaleingangs des wenigstens einen Digital-zu-Analog-Wandlers (DA1; DA2) gebildet ist; und/oder

--wobei der Digital-zu-Analog-Wandler (DA1; DA2) dafür eingerichtet ist, am Analogsignalausgang eine vom Steuersignal abhängige, veränderliche Gleichspannung bereitzustellen; und/oder

- wobei die Kompensationsschaltung einen zweiten Digital-zu-Analog-Wandler (DA2) mit einem, insb. das Steuersignal der Meß- und Steuerschaltung empfangenden und/oder den Steuersignaleingang der Kompensationsschaltung bildenden, Digitalsignaleingang und mit einem, insb. die zweite Kompensationsspannung liefernden und/oder den zweite Kompensationsspannungsausgang bildenden, Analogsignalausgang aufweist.

**16.** Meßelektronik nach einem der vorherigen Ansprüche,

- wobei die Eingangsschaltung dafür eingerichtet ist, daß die erste Signalspannung ($u_{s1}$) am ersten Signalspannungsausgang auch von der zweiten Signalspannung ($u_{s2}$) am zweiten Signalspannungsausgang und die die zweite Signalspannung ($u_{s2}$) am zweiten Signalspannungsausgang auch von der ersten Signalspannung ($u_{s1}$) am ersten Signalspannungsausgang abhängig sind, insb. derart, eine zwischen der ersten Signalspannung ($u_{s1}$) und der zweiten Signalspannung ($u_{s2}$) existierende Spannungsdifferenz ($\Delta u_{12}$) proportional zur Potentialdifferenz ($\Delta\varphi_{12}$) ist; und/oder

- wobei die digitale Auflösung, N, mit der die Spannungsdifferenz ($\Delta u_{12}$) in das digitale Spannungsmeßsignal ($u_D$) umgesetzt wird, mehr als 20 Bit beträgt; und/oder

- wobei die Kompensationsschaltung und die Meß- und Steuerschaltung dafür eingerichtet sind, die Spannungsdifferenz ($\Delta u_{12}$) innerhalb des vorgegebenen Umsetzbereichs, $\Delta U_{12}$, zu halten.

**17.** Meßelektronik nach einem der vorherigen Ansprüche, weiters umfassend: eine Versorgungsschaltung, die dafür eingerichtet ist, eine, insb. auf einen dafür vorgegeben Spannungswert, $U_N$, geregelte und/oder konstante, Betriebsspannung ($u_N$) zum Speisen der Eingangsschaltung, der Kompensationsschaltung sowie der Kompensationsschaltung bereitzustellen.

**18.** Meßsystem zum Ermitteln einer Volumendurchflußrate und/oder einer Strömungsgeschwindigkeit einer, insb. einem vorübergehend konstanten Magnetfeld ausgesetzten und/oder in einer Rohrleitung strömenden, strömenden Flüssigkeit, welches Meßsystem umfaßt:

- eine Meßelektronik nach einem der vorherigen Ansprüche;
- ein Meßrohr zum Führen der Flüssigkeit; sowie
- zwei voneinander beabstandet am Meßrohr angeordnete, insb. jeweils mit einer Elektrodenspitze in ein Lumen des Meßrohrs ragende, Meßelektroden, von denen eine erste Meßelektrode mit dem ersten Schaltungseingang der Eingangsschaltung verbunden ist und eine zweite Meßelektrode mit dem zweiten Schaltungseingang der Eingangsschaltung verbunden ist.

**19.** Meßsystem nach Anspruch 18,

- wobei die Meßelektroden eingerichtet sind, daß deren jeweiliges elektrisches Potential jeweils von einer in einer im Meßrohr geführten Flüssigkeit auftretenden, insb. durch Ladungsträgerverschiebung innerhalb der Flüssigkeit bewirkten, elektrischen Spannung abhängig ist; und/oder

- wobei die Meßelektroden entlang einer gedachten, insb. kreisförmigen und/oder eine Querschnittsfläche des Meßrohrs umspannende, Umfangslinie des Meßrohrs voneinander beabstandet am Meßrohr angeordnet sind; und/oder

- wobei jede der Meßelektroden von einer im Meßrohr geführten Flüssigkeit kontaktierbar ist.

20. Meßsystem nach einem der Ansprüche 18 bis 19, weiters umfassend: einen Magnetfeldgenerator mit einem Steuersignaleingang, wobei der Magnetfeldgenerator dafür eingerichtet ist, ein ein Lumen des Meßrohrs, insb. auch innerhalb eines sich zwischen den Meßelektroden erstreckenden Bereichs, zumindest teilweise durchsetzendes Magnetfeld (B) zu erzeugen, das sich in Abhängigkeit von einem dem Steuersignaleingang anlegbaren Magnetfeldsteuersignal ändert, insb. derart, daß das Magnetfeld (B) eine senkrecht zu einer die beiden Meßelektroden imaginär verbindenden gedachten Verbindungsachse verlaufende, die Nutzkomponente der Potentialdifferenz beeinflussende Nutzkomponente ($B_N$) mit einer mit der Taktrate, $f_M = 1/T_M$, periodisch ändernden Magnetfeldrichtung aufweist.

21. Meßsystem nach Anspruch 20, wobei die Meß- und Steuerschaltung der Meßelektronik einen mit dem Steuersignaleingang des Magnetfeldgenerators verbundenen Magnetfeldsteuersignalausgang aufweist und dafür eingerichtet ist, am Magnetfeldsteuersignalausgang ein, insb. periodisch getaktetes, Magnetfeldsteuersignal bereitzustellen.

22. Meßsystem nach dem vorherigen Anspruch,

- wobei das Magnetfeldsteuersignal als ein Rechtecksignal ausgebildete ist; und/oder
- wobei das Magnetfeldsteuersignal eine taktweise, insb. periodische, Änderung des vom Magnetfeldgenerator erzeugten Magnetfelds bewirkt, insb. derart, daß die Nutzkomponente der Nutzkomponente ($B_N$) des Magnetfeldes (B) eine mit der Taktrate, $f_M = 1/T_M$, periodisch ändernden Magnetfeldrichtung aufweist; und/oder
- wobei die Meß- und Steuerschaltung, dafür eingerichtet ist, das Magnetfeldsteuersignal als ein mit der Taktrate, $f_M = 1/T_M$, periodisch getaktetes Rechtecksignal auszugeben.

23. Meßsystem nach einem der Ansprüche 18 bis 22, wobei die Meß- und Steuerschaltung dafür eingerichtet ist, mittels des digitalen Spannungsmeßsignals ($u_D$) eine Folge von die Volumendurchflußrate jeweils momentan repräsentierenden Durchfluß-Meßwerten zu generieren.

24. Meßsystem nach Anspruch 23, wobei die Meß- und Steuerschaltung dafür eingerichtet ist, mittels des digitalen Spannungsmeßsignals ($u_D$) eine Spannungsdifferenzenfolge ($\Delta u_D$), nämliche eine Folge von Digitalwerten, $\Delta U_D$, von denen jeder eine Differenz zwischen jeweils zwei zeitlich aufeinanderfolgenden Digitalwerten des digitalen Spannungsmeßsignals ($u_D$) repräsentiert, zu generieren.

25. Meßsystem nach Anspruch 24,

- wobei die Meß- und Steuerschaltung dafür eingerichtet ist, eine Differenz zwischen während unterschiedlicher Betriebsmoden der Kompensationsschaltung generierten Digitalwerten, $U_D$, des digitalen Spannungsmeßsignals ($u_D$) repräsentierende Digitalwerte, $\Delta U_D$, nicht zu generieren; und/oder
- wobei die Meß- und Steuerschaltung dafür eingerichtet ist, die Folge von die Volumendurchflußrate jeweils momentan repräsentierenden Durchfluß-Meßwerten mittels der Spannungsdifferenzenfolge ($\Delta u_D$) zu generieren, insb. nämlich solche Digitalwerte, $\Delta U_D$, der Spannungsdifferenzenfolge ($\Delta u_D$) nicht bei der Ermittlung eines Durchfluß-Meßwerts zu verwenden, die jeweils eine Differenz zwischen während unterschiedlicher Betriebsmoden der Kompensationsschaltung generierten Digitalwerten, $U_D$, des digitalen Spannungsmeßsignals ($u_D$) repräsentieren.

**Claims**

1. Measuring electronics (1) for determining a potential difference ($\Delta\varphi_{12}$) - particularly dependent on a volume flow rate of a flowing liquid, which is exposed to a magnetic field - between a first measuring electrode having a first electrical potential ($\varphi_1$) and a second measuring electrode having a second electrical potential ($\varphi_2$),

- wherein said potential difference ($\Delta\varphi_{12}$) contains a useful component ($\Delta\varphi_N$) which is variable over time - particularly according to a predefined clock pulse, $T_M$,

-- wherein said useful component is smaller than a maximum voltage value predefined for it $\Delta\varphi_{NMAX}$, and
-- wherein said useful component is greater than a minimum voltage value predefined for it $\Delta\varphi_{NMIN}$, and

- wherein said potential difference ($\Delta\varphi_{12}$) contains an interference component ($\Delta\varphi_S$) which is constant over time or which changes more slowly than the useful component - particularly compared to a clock rate, $f_M = 1/T_M$,

with which the useful component changes over time,

-- wherein said interference component is smaller than a maximum voltage value predefined for it, $\Delta\varphi_{SMAX}$, which is greater than the maximum predefined voltage value, $\Delta\varphi_{NMAX}$, of the useful component ($\Delta\varphi_N$), and
-- wherein said interference component is greater than a minimum voltage value predefined for it, $\Delta\varphi_{SMIN}$, which is smaller than the minimum predefined voltage value, $\Delta\varphi_{NMIN}$, of the useful component ($\Delta\varphi_N$), wherein said measuring electronics comprise:

- a reference electrode (GRN) that has a reference potential (($\varphi_{Ref}$), which is particularly fixed;
- an input circuit

-- with a first circuit input, which is formed using a non-inverting input of a first impedance converter ($OV_1$), and which can be electrically connected to the first measuring electrode,
-- with a second circuit input, which is formed using a non-inverting input of a second impedance converter ($OV_2$), and which can be electrically connected to the second measuring electrode,
-- with a first signal voltage output formed by means of an output of the first impedance converter,
-- and with a second signal voltage output formed by means of an output of the second impedance converter
-- wherein the input circuit is designed to provide

--- at the first signal voltage output, a first signal voltage ($u_{s1}$) that depends at least on the first electrical potential ($\varphi_1$) and is referenced to the reference potential (($\varphi_{Ref}$), and
--- at the second signal voltage output, a second signal voltage ($u_{s2}$) that depends on the second electrical potential ($\varphi_2$) and is referenced to the reference potential (($\varphi_{Ref}$), particularly in such a way that a voltage difference existing between the first signal voltage and the second signal voltage corresponds to a predefined multiple, $V_1$, of the potential difference ($\Delta\varphi_{12}$) and/or to less than 5 times the potential difference ($\Delta\varphi_{12}$);

- a compensation circuit (12)

-- with a first compensation voltage output,
-- with a second compensation voltage output,
-- and with a control signal input,
-- wherein the compensation circuit is designed to provide - at the first compensation voltage output - a first compensation voltage ($u_{c1}$), namely a first adjustable DC voltage that is referenced to the reference potential, and - at the second compensation voltage output - a second compensation voltage ($u_{c2}$), particularly a second DC voltage, namely adjustable or fixed, that is referenced to the reference potential, particularly in such a way that a voltage difference existing between the first compensation voltage and the second compensation voltage corresponds to more than 25 % of a current voltage value of the interference component, and
-- wherein the compensation circuit has at least two operating modes which can be selected by means of a compensation control signal which can be applied at the control signal input, and wherein the compensation circuit is configured to set

--- in a first operating mode, the first compensation voltage ($u_{c1}$) to a first voltage value, $U_{c11}$, predefined for this purpose, and
--- in a second operating mode, the first compensation voltage ($u_{c1}$) to a second voltage value, $U_{c12}$, predefined for this purpose, which is greater than the first voltage value, $U_{c11}$, predefined for the first compensation voltage ($u_{c1}$) ;

- as well as a measurement and control circuit (13)

-- with a first signal voltage input connected to the first signal voltage output of the input circuit,
-- with a second signal voltage input electrically connected to the second signal voltage output of the input circuit,
-- with a third signal voltage input electrically connected to the first compensation voltage output of the compensation circuit,
-- with a fourth signal voltage input electrically connected to the second compensation voltage output of the compensation circuit,

-- and with a compensation control output connected to the control signal input of the compensation circuit,

-- wherein the measuring and control circuit is configured to convert a voltage difference ($\Delta u_{12}$) existing between a first compensated signal voltage ($u_{sc1}$) which depends on both the first signal voltage ($u_{s1}$) and the first compensation voltage ($u_{c1}$), and a second compensated signal voltage ($u_{sc2}$) which depends on both the second signal voltage ($u_{s2}$) and the second compensation voltage ($u_{c2}$), said voltage difference having a predefinable scan rate, $f_A$, particularly greater compared to a clock rate, $f_M = 1/T_M$, and with a digital resolution, N, particularly greater than 16 bits, into a digital voltage measuring signal ($u_D$) that represents said voltage difference ($\Delta u_{12}$), namely a series of digital values, $U_D$, selected from a predefined graded set of values, wherein said digital values each represent a quantized measured value, $U_{12}$, of the voltage difference ($\Delta u_{12}$) that is located within a predefined conversion range, $\Delta u_{12}$, and

- wherein the measuring and control circuit is configured to provide, at the compensation control output, a compensation control signal for selecting one of the selectable operating modes of the compensation circuit, in such a way

-- that the compensation control signal for selecting the first operating mode of the compensation circuit has a first signal value corresponding to a first operating mode of the compensation circuit, or

-- that the compensation control signal for selecting the second operating mode of the compensation circuit has a second signal value, which is different from the first signal value, corresponding to a second operating mode of the compensation circuit.

2. Measuring electronics as claimed in the previous claim, wherein the measuring and control circuit is designed

- to set the compensation control signal to the first signal value corresponding to the first operating mode of the compensation circuit

- and after this, to compare at least a digital value, $U_{DI}$, of the first type, namely a digital value of the digital voltage measuring signal ($u_D$) generated while the first operating mode of the compensation circuit is selected, with at least a first predefined reference value, $U_{r1}$, particularly corresponding to a predefined minimum value, $U_{12Min}$, for a measured value, $U_{12}$ of the voltage difference ($\Delta u_{12}$).

3. Measuring electronics as claimed in the previous claim, wherein the measuring and control circuit is designed to

- detect an undershooting of the first reference value, $U_{r1}$, by said digital value, $U_{DI}$, of the first type

- and after this, to set the compensation control signal to the second signal value corresponding to the second operating mode of compensation circuit for the purpose of increasing the voltage difference ($\Delta u_{12}$), particularly to a measured value, $U_{12}$, which is greater than a minimum value, $U_{12Min}$, predefined for this purpose.

4. Measuring electronics as claimed in the previous claim, wherein the measuring and control circuit is designed to compare at least a digital value, $U_{DII}$, of the second type, particularly a digital value of the digital voltage measuring signal ($u_D$) generated while the second operating mode of the compensation circuit is selected, with a second predefined reference value, $U_{r2}$, particularly corresponding to a predefined maximum value, $U_{12Max}$, for a measured value, $U_{12}$, of the voltage difference ($\Delta u_{12}$), particularly in such a way that the measuring and control circuit is designed to detect an overshooting of the second reference value by said digital value, $U_{DII}$, of the second type, and then to set the compensation control signal to the first signal value corresponding to the first operating mode of the compensation circuit for the purpose of reducing the voltage difference ($\Delta u_{12}$), particularly to a measured value, $U_{12}$, which is less than a maximum value, $U_{12Max}$, predefined for this purpose.

5. Measuring electronics as claimed in one of the previous claims, wherein the compensation circuit and the measuring and control circuit are designed to set the voltage difference ($\Delta u_{12}$) to a value less than a maximum value, $U_{12Max}$, predefined for this purpose, particularly less than +5 V, and/or to a value greater than a minimum value, $U_{12Min}$, predefined for this purpose, particularly greater than -5 V, particularly to maintain the voltage difference ($\Delta u_{12}$) in the predefined conversion range, $\Delta u_{12} = U_{12Max} - U_{12Min}$.

6. Measuring electronics as claimed in the previous claim,

- wherein said maximum value, $U_{12Max}$, corresponds to an upper interval limit of the conversion range, $\Delta u_{12}$, and said minimum value, $U_{12Min}$, corresponds to a lower interval limit of the conversion range, $\Delta u_{12}$; and/or

- wherein the conversion range, $\Delta u_{12}$, corresponds to a difference, $U_{12Max} - U_{12Min}$, between said maximum value, $U_{12Max}$, and said minimum value, $U_{12Min}$.

7. Measuring electronics as claimed in one of the previous claims, wherein the measuring and control circuit is designed to generate a measured voltage ($u_m$) representing the voltage difference ($\Delta u_{12}$), particularly to output and/or generate the measured voltage ($u_D$) as a multiple, $V_2$, of the voltage difference ($\Delta u_{12}$) of the voltage difference ($\Delta u_{12}$) in such a way that the measured voltage ($U_M$) is less than a maximum voltage value, $U_{MMax}$, predefined for this purpose, particularly less than +5 V, and/or greater than a minimum voltage value, $U_{MMin}$, predefined for this purpose, particularly greater than -5 V, and/or that the measured voltage ($U_M$) is located in a predefined measured voltage range, $\Delta U_M = U_{MMax} - U_{MMin}$, which is less than 5 V.

8. Measuring electronics as claimed in Claim 7, wherein the measuring and control circuit comprises a subtractor, particularly formed by a negative feedback differential amplifier, with an inverting signal input, with a non-inverting signal input and with a measured voltage output.

9. Measuring electronics as claimed in Claim 8,

   - wherein the first and the third signal voltage input of the measuring and control circuit are formed by means of the non-inverting signal input of the subtractor and the second and the fourth signal voltage input of the measuring and control circuit are formed by means of the inverting signal input of the subtractor; and/or
   - wherein the subtractor is configured to provide the measured voltage ($u_m$) at the measured voltage output.

10. Measuring electronics as claimed in one of the previous claims, wherein the measuring and control circuit has an analog-to-digital converter (A/D) with an analog signal input and with a digital signal output, said converter being clocked with the clock rate, $f_A$, particularly having a nominal resolution of more than 16 bits.

11. Measuring electronics as claimed in Claim 8 and 10,

   - wherein the analog signal input of the analog-to-digital converter (A/D) is electrically connected to the measured voltage output of the subtractor, and
   -- wherein the analog-to-digital converter (A/D) is designed to provide the digital voltage measuring signal ($u_D$) at the digital signal output.

12. Measuring electronics as claimed in one of the previous claims,

   - wherein the compensation circuit is configured to set the second compensation voltage in the first operating mode to a first voltage value, $U_{c21}$, predefined for this purpose, which is greater than the first voltage value, $U_{c11}$, of the first compensation voltage ($u_{c1}$); and/or
   - wherein the compensation circuit is configured to set the second compensation voltage in the second operating mode to a second voltage value, $U_{c22}$, predefined for this purpose, which is less than the second voltage value, $U_{c12}$, of the first compensation voltage ($u_{c1}$).

13. Measuring electronics as claimed in the previous claim, wherein the compensation circuit is configured to set - in the first operating mode - the second compensation voltage ($u_{c2}$) to the voltage value, $U_{c21}$, and - in the second operating mode - to set the second compensation voltage ($u_{c2}$) to the voltage value, $U_{c22}$, in such a way that a compensation voltage difference ($\Delta u_{c12}$), particularly a voltage difference set between the first compensation voltage ($u_{c1}$) and the second compensation voltage ($u_{c2}$), adopts a voltage value, $U_{c11} - U_{c21}$, in the first operating mode, which is different from a voltage value, $U_{c12} - U_{c22}$, which the compensation voltage difference ($\Delta u_{c12}$) adopts in the second operating mode, particularly in such a way that said voltage value, $U_{c12} - U_{c22}$, is greater than the voltage value, $U_{c11} - U_{c21}$.

14. Measuring electronics as claimed in one of the previous claims, wherein the compensation circuit comprises at least a - first - digital-to-analog converter (DA1, DA2) with a digital signal input, particularly receiving the control signal of the measuring and control circuit and/or forming the control signal input of the compensation circuit, and with an analog signal output, particularly delivering the first compensation voltage and/or forming the first compensation voltage output.

15. Measuring electronics as claimed in Claim 14,

- wherein the first compensation voltage output of the compensation circuit is formed by the analog signal output of the at least one digital-to-analog converter (DA1, DA2), particularly in that the analog signal output of the digital-to-analog converter (DA1, DA2) is electrically connected to the first signal voltage output of the input circuit with the interconnection of at least one resistance element ($r_{m3}$, $r_{m4}$); and/or

-- wherein the digital-to-analog converter (DA1, DA2) is designed to set the first compensation voltage ($u_{c1}$), particularly in that a DC voltage set at its analog signal output drives a compensation current through at least one resistance element electrically connected to the analog signal output; and/or

- wherein the control signal input of the compensation circuit is formed by the digital signal input of the at least one digital-to-analog converter (DA1, DA2); and/or

-- wherein the digital-to-analog converter (DA1, DA2) is designed to provide a variable DC voltage, which depends on the control signal, at the analog signal output; and/or

- wherein the compensation circuit has a second digital-to-analog converter (DA2) with a digital signal input, particularly receiving the control signal of the measuring and control circuit and/or forming the control signal input of the compensation circuit, and with an analog signal output, particularly delivering the second compensation voltage and/or forming the second compensation voltage output.

**16.** Measuring electronics as claimed in one of the previous claims,

- wherein the input circuit is configured in such a way that the first signal voltage ($u_{s1}$) present at the first signal voltage output also depends on the second signal voltage ($u_{s2}$) present at the second signal voltage output and the second signal voltage ($u_{s2}$) present at the second signal voltage output also depends on the first signal voltage ($u_{s1}$) present at the first signal voltage output, particularly in such a way that a voltage difference ($\Delta u_{s12}$) existing between the first signal voltage ($u_{s1}$) and the second signal voltage ($u_{s2}$) is proportional to the potential difference ($\Delta\varphi_{12}$); and/or

- wherein the digital resolution, N, with which the voltage difference ($\Delta u_{12}$) is converted to the digital voltage measuring signal ($u_D$), is greater than 20 bits; and/or

- wherein the compensation circuit and the measuring and control circuit are configured to keep the voltage difference ($\Delta u_{12}$) within the predefined conversion range, $\Delta u_{12}$.

**17.** Measuring electronics as claimed in one of the previous claims, further comprising: a supply circuit that is designed to provide an operating voltage ($U_N$), particularly that is regulated to a voltage value, $U_N$, predefined for this purpose, and/or a constant operating voltage, for the purpose of supplying to the input circuit, the compensation circuit and the compensation circuit.

**18.** Measuring system for determining a volume flow rate and/or a flow velocity of a flowing liquid, particularly a liquid temporarily exposed to a constant magnetic field and/or flowing through a pipe, said measuring system comprising:

- measuring electronics as claimed in one of the previous claims;
- a measuring tube designed to conduct the liquid; and
- two measuring electrodes arranged at a distance from one another on the measuring tube, particularly each with an electrode tip projecting into an interior channel of the measuring tube, wherein a first measuring electrode is connected to the first circuit input of the input circuit and a second measuring electrode is connected to the second circuit input of the input circuit.

**19.** Measuring system as claimed in Claim 18,

- wherein the measuring electrodes are configured in such a way that their electrical potential depends, in each case, on an electrical voltage occurring in a liquid conducted through the measuring tube, particularly caused by charge carrier shifting within the liquid; and/or

- wherein the measuring electrodes are arranged on the measuring tube at a distance from one another along an imaginary circumferential line of the measuring tube, particularly circular and/or encompassing a cross-sectional area of the measuring tube; and/or

- wherein each of the measuring electrodes can be contacted by a liquid conducted in the measuring tube.

**20.** Measuring system as claimed in one of the Claims 18 to 19, further comprising: a magnetic field generator with a control signal input, wherein the magnetic field generator is configured to generate a magnetic field (B) at least partially passing through an interior channel of the measuring tube, particularly also within an area extending between the measuring electrodes, said magnetic field changing depending on a magnetic field control signal that can be applied on the control signal input, particularly in such a way that the magnetic field (B) has a useful component ($B_N$) that is perpendicular to an imaginary connecting axis connecting the two measuring electrodes in an imaginary manner, which influences the useful component of the potential difference and which has a magnetic field direction periodically changing with a clock rate, $f_M = 1/T_M$.

21. Measuring system as claimed in Claim 20, wherein the measuring and control circuit of the measuring electronics has a magnetic field control signal output that is connected to the control signal input of the magnetic field generator and is designed to provide a magnetic field control signal, particularly a periodically clocked signal, at the magnetic field control signal output.

22. Measuring system as claimed in the previous claim,

    - wherein the magnetic field control signal is designed as a rectangular signal; and/or
    - wherein the magnetic field control signal causes a clocked, particularly periodic, change in the magnetic field generated by the magnetic field generator, particularly in such a way that the useful component of the useful component ($B_N$) of the magnetic field (B) has a magnetic field direction periodically changing with the clock rate, $f_M = 1/T_M$; and/or
    - wherein the measuring and control circuit is designed to output the magnetic field control signal as a rectangular signal periodically clocked with the clock rate, $f_M = 1/T_M$.

23. Measuring system as claimed in one of the Claims 18 to 22, wherein the measuring and control circuit is designed to generate, using the digital voltage measuring signal ($u_D$), a series of flow measured values currently representing the volume flow rate.

24. Measuring system as claimed in Claim 23, wherein the measuring and control circuit is designed to generate, using the digital voltage measuring signal ($u_D$), a series of voltage differences ($\Delta u_D$), particularly a series of digital values, $\Delta u_D$, wherein each said digital value represents a difference between two consecutive digital values of the digital voltage measuring signal ($u_D$).

25. Measuring system as claimed in Claim 24,

    - wherein the measuring and control circuit is designed to not generate digital values, $\Delta U_D$, representing a difference between the digital values, $U_D$, of the digital voltage measuring signal ($u_D$) generated during different operating modes of the compensation circuit; and/or
    - wherein the measuring and control circuit is designed to generate, using the voltage difference sequence ($\Delta U_D$), the sequence of flow measured values currently representing the volume flow rate, particularly not to use the digital values, $\Delta U_D$, of the voltage difference sequence ($\Delta U_D$) to determine a flow measured value that represent a difference between the digital values, $U_D$, of the digital voltage measuring signal ($u_D$) generated during different operating modes of the compensation circuit.

**Revendications**

1. Électronique de mesure (1) destinée à la détermination, notamment d'une différence de potentiel ($\Delta\varphi_{12}$) - dépendant d'un débit volumique d'un liquide en écoulement, lequel est exposé à un champ magnétique - entre une première électrode de mesure présentant un premier potentiel électrique ($\varphi_1$) et une deuxième électrode de mesure présentant un deuxième potentiel électrique ($\varphi_2$),

    - ladite différence de potentiel ($\Delta\varphi_{12}$) contenant une composante utile ($\Delta\varphi_N$) variable dans le temps - notamment selon une cadence, $T_M$, prédéfinie,

        -- laquelle composante utile est inférieure à une valeur de tension maximale prédéfinie $\Delta\varphi_{NMAX}$, et
        -- laquelle composante utile est supérieure à une valeur de tension minimale prédéfinie $\Delta\varphi_{NMIN}$, et

    - ladite différence de potentiel ($\Delta\varphi_{12}$) contenant une composante parasite ($\Delta\varphi_s$) constante dans le temps ou variant plus lentement que la composante utile - notamment comparée à une fréquence, $f_M = 1/T_M$, avec laquelle la composante utile varie dans le temps,

-- laquelle composante parasite est inférieure à une valeur de tension maximale prédéfinie, $\Delta\varphi_{SMAX}$, qui est supérieure à la valeur de tension maximale prédéfinie, $\Delta\varphi_{NMAX}$, de la composante utile ($\Delta\varphi_N$), et

-- laquelle composante parasite est supérieure à une valeur de tension minimale prédéfinie, $\Delta\varphi_{SMIN}$, qui est inférieure à la valeur de tension minimale prédéfinie, $\Delta\varphi_{NMIN}$, de la composante utile ($\Delta\varphi_N$), laquelle électronique de mesure comprend :

- une électrode de référence (GRN) présentant un potentiel de référence ($\varphi_{Ref}$), notamment fixe ;
- un circuit d'entrée

-- avec une première entrée de commutation, laquelle est formée au moyen d'une entrée non inverseuse d'un premier convertisseur d'impédance ($OV_1$), et peut être reliée électriquement avec la première électrode de mesure,

-- avec une deuxième entrée de commutation, laquelle est formée au moyen d'une entrée non inverseuse d'un deuxième convertisseur d'impédance ($OV_2$), et peut être reliée électriquement avec la deuxième électrode de mesure,

-- avec une première sortie de tension de signal formée au moyen d'une sortie du premier convertisseur d'impédance,

-- et avec une deuxième sortie de tension de signal formée au moyen d'une sortie du deuxième convertisseur d'impédance

-- le circuit d'entrée étant conçu de telle sorte à mettre à disposition,

--- sur la première sortie de tension de signal, une première tension de signal ($u_{s1}$) dépendant au moins du premier potentiel électrique ($\varphi_1$) se rapportant au potentiel de référence ($\varphi_{Ref}$), et

--- sur la deuxième sortie de tension de signal, une deuxième tension de signal ($u_{s2}$) dépendant du deuxième potentiel électrique ($\varphi_2$) se rapportant au potentiel de référence ($\varphi_{Ref}$), notamment de telle sorte qu'une différence de tension existant entre la première tension de signal et la deuxième tension de signal correspond à un multiple prédéfini, $V_1$, de la différence de potentiel ($\Delta\varphi_{12}$) et/ou à moins de 5 fois la différence de potentiel ($\Delta\varphi_{12}$) ;

- un circuit de compensation (12)

-- avec une première sortie de tension de compensation,

-- avec une deuxième sortie de tension de compensation,

-- et avec une entrée de signal de commande,

-- le circuit de compensation étant conçu de telle sorte à mettre à disposition, sur la première sortie de tension de compensation, une première tension de compensation ($u_{c1}$), notamment une première tension continue réglable, se rapportant au potentiel de référence, et sur la deuxième sortie de tension de compensation, une deuxième tension de compensation ($u_{c2}$), notamment une deuxième tension continue, notamment réglable ou fixe, se rapportant au potentiel de référence, notamment de telle sorte qu'une différence de tension existant entre la première tension de compensation et la deuxième tension de compensation corresponde à plus de 25 % d'une valeur de tension momentanée de la composante parasite, et

-- le circuit de compensation présentant deux modes de fonctionnement pouvant être sélectionnés au moyen d'un signal de commande de compensation pouvant être appliqué à l'entrée de signal de commande, et le circuit de compensation étant configuré de telle sorte à régler,

--- dans un premier mode de fonctionnement, la première tension de compensation ($u_{c1}$) à une première valeur de tension, $U_{c11}$, prédéfinie à cette fin, et

--- dans un deuxième mode de fonctionnement, la première tension de compensation ($u_{c1}$) à une deuxième valeur de tension, $U_{c12}$, prédéfinie à cette fin, qui est supérieure à la première valeur de tension, $U_{c11}$, prédéfinie pour la première tension de compensation ($u_{c1}$) ;

- ainsi qu'un circuit de mesure et de commande

-- avec une première entrée de tension de signal reliée avec la première sortie de tension de signal du circuit d'entrée,

-- avec une deuxième entrée de tension de signal reliée électriquement avec la deuxième sortie de tension de signal du circuit d'entrée,

-- avec une troisième entrée de tension de signal reliée électriquement avec la première sortie de tension de compensation du circuit de compensation,

-- avec une quatrième entrée de tension de signal reliée électriquement avec la deuxième sortie de tension de compensation du circuit de compensation,

-- et avec une sortie de commande de compensation reliée avec l'entrée de signal de commande du circuit de compensation,

-- le circuit de mesure et de commande étant configuré de telle sorte à convertir une différence de tension ($\Delta u_{12}$) existant entre une première tension de signal compensée ($u_{sc1}$) dépendant à la fois de la première tension de signal ($u_{s1}$) et de la première tension de compensation ($u_{c1}$), et une deuxième tension de signal compensée ($u_{sc2}$) dépendant à la fois de la deuxième tension de signal ($u_{s2}$) et de la deuxième tension de compensation ($u_{c2}$), laquelle différence de tension présente une fréquence d'échantillonnage, $f_A$, notamment supérieure comparée à la fréquence, $f_M = 1/T_M$, ainsi qu'une résolution numérique, N, notamment supérieure à 16 bits, en un signal de mesure de tension numérique ($u_D$) représentant ladite différence de tension ($\Delta u_{12}$), à savoir une suite de valeurs numériques, $U_D$, sélectionnée à partir d'une réserve prédéfinie de valeurs à échelons, valeurs numériques dont chacune d'entre elles représente une valeur mesurée quantifiée, $U_{12}$, de la différence de tension ($\Delta u_{12}$), laquelle valeur mesurée est située dans une plage de conversion prédéfinie, $\Delta u_{12}$, et

- le circuit de mesure et de commande étant conçu de telle sorte à mettre à disposition, sur la sortie de commande de compensation, un signal de commande de compensation destiné à la sélection de l'un des modes de fonctionnement sélectionnables du circuit de compensation, de telle manière

-- que le signal de commande de compensation destiné à la sélection du premier mode de fonctionnement du circuit de compensation présente une première valeur de signal correspondant à un premier mode de fonctionnement du circuit de compensation, ou

-- que le signal de commande de compensation destiné à la sélection du deuxième mode de fonctionnement du circuit de compensation présente une deuxième valeur de signal, différente de la première valeur de signal, correspondant à un deuxième mode de fonctionnement du circuit de compensation.

2. Électronique de mesure selon la revendication précédente, pour laquelle le circuit de mesure et de commande est conçu de telle sorte

- à définir le signal de commande de compensation sur la première valeur de signal correspondant au premier mode de fonctionnement du circuit de compensation
- et ensuite, à comparer au moins une valeur numérique, $U_{DI}$, de premier type, notamment une valeur numérique du signal de mesure de tension numérique ($u_D$) généré pendant que le premier mode de fonctionnement du circuit de compensation est sélectionné, avec au moins une première valeur de référence prédéfinie, $U_{r1}$, notamment correspondant à une valeur minimale prédéfinie, $U_{12Min}$, pour une valeur mesurée, $U_{12}$ de la différence de tension ($\Delta u_{12}$).

3. Électronique de mesure selon la revendication précédente, pour laquelle le circuit de mesure et de commande est conçu de telle sorte

- à détecter un dépassement par défaut de la première valeur de référence, $U_{r1}$, par ladite valeur numérique, $U_{DI}$, de premier type
- et ensuite, afin d'augmenter la différence de tension ($\Delta u_{12}$), notamment à une valeur mesurée, $U_{12}$, qui est supérieure à une valeur minimale, $U_{12Min}$, prédéfinie à cette fin, de telle sorte à définir le signal de commande de compensation sur la deuxième valeur de signal correspondant au deuxième mode de fonctionnement du circuit de compensation.

4. Électronique de mesure selon la revendication précédente, pour laquelle le circuit de mesure et de commande est conçu de telle sorte à comparer au moins une valeur numérique, $U_{DII}$, de deuxième type, notamment une valeur numérique du signal de mesure de tension numérique ($u_D$) généré pendant que le deuxième mode de fonctionnement du circuit de compensation est sélectionné, avec une deuxième valeur de référence prédéfinie, $U_{r2}$, notamment correspondant à une valeur maximale prédéfinie, $U_{12Max}$, pour une valeur mesurée, $U_{12}$, de la différence de tension ($\Delta u_{12}$), notamment de telle sorte que le circuit de mesure et de commande est conçu pour détecter un dépassement par excès de la deuxième valeur de référence par ladite valeur numérique, $U_{DII}$, de deuxième type, et ensuite, afin de réduire la différence de tension ($\Delta u_{12}$), notamment à une valeur mesurée, $U_{12}$, qui est inférieure à une valeur maximale, $U_{12Max}$, prédéfinie à cette fin, de telle sorte à régler le signal de commande de compensation à la première valeur de signal correspondant au premier mode de fonctionnement du circuit de compensation.

5. Électronique de mesure selon l'une des revendications précédentes, pour laquelle le circuit de compensation et le circuit de mesure et de commande sont conçus de telle sorte à régler la différence de tension ($\Delta u_{12}$) à une valeur inférieure à une valeur maximale, $U_{12Max}$, prédéfinie à cette fin, notamment inférieure à +5 V, et/ou à une valeur supérieure à une valeur minimale, $U_{12Min}$, prédéfinie à cette fin, notamment supérieure à -5 V, notamment pour maintenir la différence de tension ($\Delta u_{12}$) dans la plage de conversion prédéfinie, $\Delta u_{12} = U_{12Max} - U_{12Min}$.

6. Électronique de mesure selon la revendication précédente,

   - pour laquelle ladite valeur maximale, $U_{12Max}$, correspond à une limite d'intervalle supérieure de la plage de conversion, $\Delta u_{12}$, et ladite valeur minimale, $U_{12Min}$, correspond à une limite d'intervalle inférieure de la plage de conversion, $\Delta u_{12}$ ; et/ou
   - pour laquelle la plage de conversion, $\Delta u_{12}$, correspond à une différence, $U_{12Max}-U_{12Min}$, entre ladite valeur maximale, $U_{12Max}$, et ladite valeur minimale, $U_{12Min}$.

7. Électronique de mesure selon l'une des revendications précédentes, pour laquelle le circuit de mesure et de commande est conçu pour générer une tension de mesure ($u_M$) représentant la différence de tension ($\Delta u_{12}$), notamment pour délivrer et/ou générer la tension de mesure ($u_D$) en tant que multiple, $V_2$, de la différence de tension ($\Delta u_{12}$) de la différence de tension ($\Delta u_{12}$), de telle sorte que la tension de mesure ($U_M$) soit inférieure à une valeur de tension maximale, $U_{MMax}$, prédéfinie à cette fin, notamment inférieure à +5 V, et/ou supérieure à une valeur de tension minimale, $U_{MMin}$, prédéfinie à cette fin, notamment supérieure à -5 V, et/ou en ce que la tension de mesure ($u_M$) se situe dans une plage de tension de mesure prédéfinie, $\Delta U_M = U_{MMax} - U_{MMin}$, qui est inférieure à 5 V.

8. Électronique de mesure selon la revendication 7, pour laquelle le circuit de mesure et de commande comprend un soustracteur, notamment formé au moyen d'un amplificateur différentiel à contre-réaction, avec une entrée de signal inverseuse, avec une entrée de signal non inverseuse et avec une sortie de tension de mesure.

9. Électronique de mesure selon la revendication 8,

   - pour laquelle la première et la troisième entrée de tension de signal du circuit de mesure et de commande sont formées au moyen de l'entrée de signal non inverseuse du soustracteur et la deuxième et la quatrième entrée de tension de signal du circuit de mesure et de commande sont formées au moyen de l'entrée de signal inverseuse du soustracteur ; et/ou
   - dans lequel le soustracteur est configuré de manière à mettre à disposition la tension de mesure ($u_M$) à la sortie de tension de mesure.

10. Électronique de mesure selon l'une des revendications précédentes, pour laquelle le circuit de mesure et de commande comprend un convertisseur analogique-numérique (A/D) avec une entrée de signal analogique et une sortie de signal numérique, lequel convertisseur est cadencé à la fréquence, $f_A$, notamment présentant une résolution nominale de plus de 16 bits.

11. Électronique de mesure selon la revendication 8 et 10,

   - pour laquelle l'entrée de signal analogique du convertisseur analogique-numérique (A/D) est électriquement reliée à la sortie de tension de mesure du soustracteur, et
   -- le convertisseur analogique-numérique (A/D) étant agencé pour fournir le signal de mesure de tension numérique ($u_D$) à la sortie de signal numérique.

12. Électronique de mesure selon l'une des revendications précédentes,

   - pour laquelle le circuit de compensation est configuré de telle sorte à régler la deuxième tension de compensation dans le premier mode de fonctionnement à une première valeur de tension, $U_{c21}$, prédéfinie à cette fin, qui est supérieure à la première valeur de tension, $U_{c11}$, de la première tension de compensation ($u_{c1}$) ; et/ou
   - pour laquelle le circuit de compensation est configuré de telle sorte à régler la deuxième tension de compensation dans le deuxième mode de fonctionnement à une deuxième valeur de tension, $U_{c22}$, prédéfinie à cette fin, qui est inférieure à la deuxième valeur de tension, $U_{c12}$, de la première tension de compensation ($u_{c1}$).

EP 2 880 406 B1

**13.** Électronique de mesure selon la revendication précédente, pour laquelle le circuit de compensation est configuré de telle sorte à régler, dans le premier mode de fonctionnement, la deuxième tension de compensation ($u_{c2}$) à la valeur de tension, $U_{c21}$, et, dans le deuxième mode de fonctionnement, à régler la deuxième tension de compensation ($u_{c2}$) à la valeur de tension, $U_{c22}$, si bien qu'une différence de tension de compensation ($\Delta u_{c12}$), notamment une différence de tension réglée entre la première tension de compensation ($u_{c1}$) et la deuxième tension de compensation ($u_{c2}$), prend une valeur de tension, $U_{c11}$ - $U_{c21}$, dans le premier mode de fonctionnement, qui est différente d'une valeur de tension, $U_{c12}$ - $U_{c22}$, que la différence de tension de compensation ($\Delta u_{c12}$) prend dans le deuxième mode de fonctionnement, notamment de telle sorte que ladite valeur de tension, $U_{c12}$ - $U_{c22}$, est supérieure à la valeur de tension, $U_{c11}$ - $U_{c21}$.

**14.** Électronique de mesure selon l'une des revendications précédentes, pour laquelle le circuit de compensation comprend au moins un - premier - convertisseur numérique-analogique (DA1, DA2) avec une entrée de signal numérique, notamment recevant le signal de commande du circuit de mesure et de commande et/ou formant l'entrée de signal de commande du circuit de compensation, et avec une sortie de signal analogique, notamment délivrant la première tension de compensation et/ou formant la première sortie de tension de compensation.

**15.** Électronique de mesure selon la revendication 14,

- pour laquelle la première sortie de tension de compensation du circuit de compensation est formée au moyen de la sortie de signal analogique de l'au moins un convertisseur numérique-analogique (DA1, DA2), notamment en ce que la sortie de signal analogique du convertisseur numérique-analogique (DA1, DA2) est reliée électriquement avec la première sortie de tension de signal du circuit d'entrée en intercalant un élément résistif ($r_{m3}$, $r_{m4}$) ; et/ou
-- le convertisseur numérique-analogique (DA1, DA2) étant conçu de telle sorte à régler la première tension de compensation ($u_{c1}$), notamment en ce qu'une tension continue réglée sur sa sortie de signal analogique fait circuler un courant de compensation à travers au moins un élément résistif relié électriquement avec la sortie de signal analogique ; et/ou
- l'entrée de signal de commande du circuit de compensation étant formée au moyen de l'entrée de signal numérique de l'au moins un convertisseur numérique-analogique (DA1, DA2) ; et/ou
-- le convertisseur numérique-analogique (DA1, DA2) étant conçu de telle sorte à mettre à disposition sur la sortie de signal analogique une tension continue variable, dépendant du signal de commande ; et/ou
- le circuit de compensation comprenant au moins un deuxième convertisseur numérique-analogique (DA2) avec une entrée de signal numérique, notamment recevant le signal de commande du circuit de mesure et de commande et/ou formant l'entrée de signal de commande du circuit de compensation, et avec une sortie de signal analogique, notamment délivrant la deuxième tension de compensation et/ou formant la deuxième sortie de tension de compensation.

**16.** Électronique de mesure selon l'une des revendications précédentes,

- pour laquelle le circuit d'entrée est configuré de telle sorte que la première tension de signal ($u_{s1}$) présente à la première sortie de tension de signal dépend également de la deuxième tension de signal ($u_{s2}$) présente à la deuxième sortie de tension de signal et la deuxième tension de signal ($u_{s2}$) présente à la deuxième sortie de tension de signal dépend également de la première tension de signal ($u_{s1}$) présente à la première sortie de tension de signal, notamment de telle sorte qu'une différence de tension ($\Delta u_{s12}$) existant entre la première tension de signal ($u_{s1}$) et la deuxième tension de signal ($u_{s2}$) est proportionnelle à la différence de potentiel ($\Delta\varphi_{12}$) ; et/ou
- la résolution numérique, N, avec laquelle la différence de tension ($\Delta u_{12}$) est convertie en signal numérique de mesure de tension ($u_D$), étant supérieure à 20 bits ; et/ou
- le circuit de compensation et le circuit de mesure et de commande étant configurés de telle sorte à maintenir la différence de tension ($\Delta u_{12}$) dans la plage de conversion prédéfinie, $\Delta u_{12}$.

**17.** Électronique de mesure selon l'une des revendications précédentes, comprenant en outre : un circuit d'alimentation agencé pour fournir une tension de fonctionnement ($U_N$) régulée et/ou constante, notamment à une valeur de tension, $U_N$, prédéfinie à cette fin, laquelle tension de fonctionnement est destinée à alimenter le circuit d'entrée, le circuit de compensation, ainsi que pour mettre à disposition du circuit de compensation.

**18.** Système de mesure destiné à la détermination d'un débit volumique et/ou d'une vitesse d'écoulement d'un liquide en écoulement, notamment d'un liquide exposé à un champ magnétique temporairement constant et/ou s'écoulant dans une conduite, lequel système de mesure comprend :

- une électronique de mesure selon l'une des revendications précédentes ;
- un tube de mesure destiné à guider le liquide ; ainsi que
- deux électrodes de mesure disposées à distance l'une de l'autre sur le tube de mesure, notamment chacune avec une pointe d'électrode faisant saillie dans un canal intérieur du tube de mesure, dont une première électrode de mesure est reliée à la première entrée de commutation du circuit d'entrée et une deuxième électrode de mesure est reliée à la deuxième entrée de commutation du circuit d'entrée.

**19.** Système de mesure selon la revendication 18,

- pour lequel les électrodes de mesure sont agencées de telle sorte que leur potentiel électrique respectif dépend d'une tension électrique se produisant dans un liquide transporté dans le tube de mesure, notamment provoquée par le déplacement des porteurs de charge dans le liquide ; et/ou
- pour lequel les électrodes de mesure sont disposées sur le tube de mesure à distance les unes des autres le long d'une ligne circonférentielle imaginaire du tube de mesure, notamment circulaire et/ou englobant une surface de section transversale du tube de mesure ; et/ou
- chacune des électrodes de mesure pouvant être mise en contact avec un liquide transporté dans le tube de mesure.

**20.** Système de mesure selon l'une des revendications 18 à 19, comprenant en outre : un générateur de champ magnétique avec une entrée de signal de commande, le générateur de champ magnétique étant agencé de telle sorte à générer un champ magnétique (B) traversant au moins partiellement un canal intérieur du tube de mesure, notamment également à l'intérieur d'une zone s'étendant entre les électrodes de mesure, lequel champ magnétique varie en fonction d'un signal de commande du champ magnétique pouvant être appliqué à l'entrée de signal de commande, notamment de telle sorte que le champ magnétique (B) présente une composante utile ($B_N$) qui est perpendiculaire à un axe de liaison imaginaire reliant imaginairement les deux électrodes de mesure, qui influence la composante utile de la différence de potentiel et qui présente une direction de champ magnétique changeant périodiquement avec la fréquence, $f_M = 1/T_M$.

**21.** Système de mesure selon la revendication 20, pour lequel le circuit de mesure et de commande de l'électronique de mesure présente une sortie de signal de commande du champ magnétique reliée avec l'entrée de signal de commande du générateur de champ magnétique et est conçu pour mettre à disposition, notamment périodiquement, un signal de commande du champ magnétique sur la sortie de signal de commande du champ magnétique.

**22.** Système de mesure selon la revendication précédente,

- pour lequel le signal de commande du champ magnétique est conçu en tant signal rectangulaire ; et/ou
- pour lequel le signal de commande du champ magnétique provoque une variation cyclique, notamment périodique, du champ magnétique généré par le générateur de champ magnétique, notamment de telle sorte que la composante utile de la composante utile ($B_N$) du champ magnétique (B) présente une direction du champ magnétique changeant périodiquement avec la cadence, $f_M = 1/T_M$ ;
  et/ou
- pour lequel le circuit de mesure et de commande est conçu pour émettre le signal de commande du champ magnétique en tant que signal rectangulaire périodique avec la cadence, $f_M = 1/T_M$.

**23.** Système de mesure selon l'une des revendications 18 à 22, pour lequel le circuit de mesure et de commande est conçu pour générer, au moyen du signal de mesure de tension numérique ($u_D$), une suite de valeurs mesurées de débit représentant momentanément le débit volumique.

**24.** Système de mesure selon la revendication 23, pour lequel le circuit de mesure et de commande est conçu pour générer, au moyen du signal de mesure de tension numérique ($u_D$), une suite de différences de tension ($\Delta U_D$), notamment une suite de valeurs numériques, $\Delta U_D$, parmi lesquelles chacune d'entre elles représente une différence entre deux valeurs numériques consécutives du signal de mesure de tension numérique ($u_D$).

**25.** Système de mesure selon la revendication 24,

- pour lequel le circuit de mesure et de commande est conçu de telle sorte à ne pas générer de valeurs

numériques, $\Delta U_D$, représentant une différence entre les valeurs numériques, $U_D$, du signal de mesure de tension numérique ($u_D$) généré pendant les différents modes de fonctionnement du circuit de compensation ; et/ou

- pour lequel le circuit de mesure et de commande est conçu de telle sorte à générer, au moyen de la séquence de différence de tension ($\Delta U_D$), la séquence de valeurs mesurées de débit représentant momentanément le débit volumique, notamment pour ne pas utiliser de telles valeurs numériques, $\Delta U_D$, de la séquence de différence de tension ($\Delta U_D$) pour la détermination d'une valeur mesurée de débit, qui représentent respectivement une différence entre des valeurs numériques, $U_D$, du signal de mesure de tension numérique ($u_D$) généré pendant différents modes de fonctionnement du circuit de compensation.

*Fig. 1*

*Fig. 2*

33

*Fig. 3*

*Fig. 4*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19716119 C
- DE 19716151 C
- EP 027181 A
- US 20020145417 A
- US 20050125168 A
- US 20100231294 A
- US 4382387 A
- US 4704908 A
- US 6693486 B
- US 6708569 B
- US 8174312 B
- US 5907103 A
- US 4723449 A